(19) Europäisches Patentamt / European Patent Office / Office européen des brevets

(11) **EP 2 674 720 B1**

(12) **EUROPÄISCHE PATENTSCHRIFT**

(45) Veröffentlichungstag und Bekanntmachung des Hinweises auf die Patenterteilung:
**14.04.2021   Patentblatt 2021/15**

(51) Int Cl.:
**G01B 9/02** *(2006.01)*        **G01B 11/02** *(2006.01)*

(21) Anmeldenummer: **13169449.9**

(22) Anmeldetag: **28.05.2013**

(54) **Vorrichtung zur interferentiellen Abstandsmessung**

Device for interferential distance measurement

Dispositif de mesure de distance interférentielle

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2012   DE 102012210079**
**27.02.2013   DE 102013203211**

(43) Veröffentlichungstag der Anmeldung:
**18.12.2013   Patentblatt 2013/51**

(73) Patentinhaber: **Dr. Johannes Heidenhain GmbH**
**83301 Traunreut (DE)**

(72) Erfinder:
• **Huber, Walter**
**83278 Traunstein (DE)**
• **Joerger, Ralph**
**83278 Traunstein (DE)**
• **Holzapfel, Wolfgang**
**83119 Obing (DE)**

(56) Entgegenhaltungen:
**DE-U1- 9 007 809        GB-A- 2 443 662**
**US-B2- 7 505 144**

EP 2 674 720 B1

**Beschreibung**

Die vorliegende Erfindung betrifft eine Vorrichtung zur interferentiellen Abstandsmessung nach dem Oberbegriff von Anspruch 1.

Neben der Erfassung von Positionsänderungen zweier zueinander beweglicher Objekte in einer lateralen Richtung gibt es Messaufgaben, bei denen ausschließlich oder ggf. zusätzlich noch die Bestimmung des Abstands dieser Objekte in einer hierzu senkrechten, vertikalen Messrichtung erforderlich ist. Für eine hochgenaue Abstandsmessung entlang einer derartigen Messrichtung bieten sich interferentielle Verfahren an, wie sie etwa in der DE 10 2007 016 774 A1 oder in der DE 10 2010 003 157 A1 offenbart sind.

Die aus der DE 10 2007 016 774 A1 bekannte Vorrichtung zur interferentiellen Abstandsmessung umfasst eine auf einer Glasplatte angeordnete Strahler-Empfänger-Einheit, die in einem zu ermittelnden Abstand von einem Objekt platziert ist, wobei am Objekt ein Spiegel angeordnet ist. Auf der Glasplatte sind Aufspaltgitter angeordnet, die das von der Lichtquelle emittierte Strahlenbündel in mindestens ein Messstrahlenbündel und mindestens ein Referenzstrahlenbündel aufspalten. Das Messstrahlenbündel propagiert in Richtung des Spiegels am Objekt und wird darüber in Richtung der Strahler-Empfänger-Einheit zurückreflektiert; das Referenzstrahlenbündel propagiert ausschließlich in der Glasplatte und gelangt nach mehreren Reflexionen in der Strahler-Empfänger-Einheit zur interferierenden Überlagerung mit dem Messstrahlenbündel. Aus den derart gewonnenen Interferenzsignalen lässt sich der Abstand zwischen der Glasplatte und dem Objekt bzw. die Abstandsänderungen zwischen diesen Komponenten ermitteln. Nachteilig an dieser Vorrichtung ist zum einen, dass im Fall von Verkippungen zwischen der Glasplatte und dem Spiegel fehlerhafte Abstandssignale resultieren. Zum anderen erweist sich an dieser Vorrichtung nachteilig, dass das Messergebnis von der Wellenlänge der genutzten Lichtquelle abhängt. Die Wellenlänge kann sich aufgrund von Schwankungen der Umgebungsbedingungen verändern und derart Fehler bei der Abstandsmessung verursachen.

Die aus der DE 10 2010 003 157 A1 bekannte Vorrichtung löst die genannten Probleme aus der DE 10 2007 016 774 A1 durch eine geeignete Strahlführung der Mess- und Referenzstrahlenbündel. Zumindest in einem vorgegebenen Sollabstand ist hierbei eine Unabhängigkeit der Abstandsmessung von eventuellen Wellenlängenschwankungen sowie eine Verkippunempfindlichkeit gewährleistet.

Eine demgegenüber nochmals optimierte Vorrichtung zur interferentiellen Abstandsmessung ist aus der Veröffentlichung "Non-contact displacement meter for pm resolution" von Hideaki Tamiya bekannt (Precision Engineering Society of Japan; Spring Meeting March 2012) bekannt; von dieser Vorrichtung wurde bei der Bildung des Oberbegriffs von Anspruch 1 ausgegangen. Diese Vorrichtung umfasst einen Messreflektor, eine Lichtquelle, ein Aufspaltelement in Form eines Strahlteilerwürfels, ein Vereinigungselement sowie eine Detektoranordnung. Über das Aufspaltelement wird ein von der Lichtquelle emittiertes Strahlenbündel in mindestens ein Messstrahlenbündel und mindestens ein Referenzstrahlenbündel aufgespalten. Das Messstrahlenbündel beaufschlagt im weiteren Strahlverlauf vier Mal den Messreflektor, bevor es am Vereinigungselement zur interferierenden Überlagerung mit dem Referenzstrahlenbündel gelangt. Über die Detektoranordnung wird mindestens ein Abstandssignal aus den interferierenden Mess- und Referenzstrahlenbündeln bezüglich des Abstands zwischen dem Messreflektor und ein oder mehreren anderen Komponenten der Vorrichtung entlang der Messrichtung erzeugt.

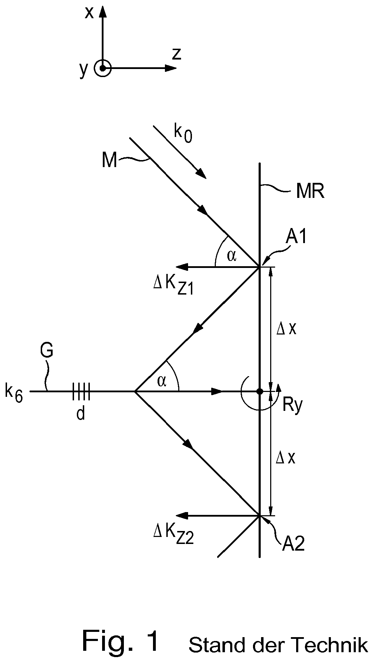

Nachteilig an dieser vorgeschlagenen Vorrichtung ist, dass im Fall einer Abweichung der Ist-Wellenlänge von einer vorausgesetzten Nenn-Wellenlänge bei einer Verkippung des Messreflektors ein Messfehler bei der Abstandsbestimmung resultiert. Hierzu sei auf Figur 1 verwiesen, die eine vereinfachte Teil-Darstellung des Strahlengangs der Vorrichtung aus der erwähnten Veröffentlichung zeigt. Von links oben her fällt gemäß dieser Darstellung das Messstrahlenbündel M am Auftreffort A1 unter einem Einfallswinkel $\alpha = 45°$ auf den Messreflektor MR ein, gelangt dann auf ein Gitter G und anschließend am Auftreffort A2 erneut auf den Messreflektor MR. Nach einer nicht-dargestellten Rückreflexion an einem Retroreflektor durchläuft das Messstrahlenbündel M diesen Weg in umgekehrter Richtung ein zweites Mal und beaufschlagt insgesamt vier Mal den Messreflektor MR, bevor es zur interferierenden Überlagerung mit dem - nicht gezeigten - Referenzstrahlenbündel kommt. Das derart resultierende Interferenzsignal stellt im Fall von Änderungen des Abstands des Messreflektors MR von den restlichen Komponenten entlang der in Figur 1 angegebenen Messrichtung z das zu bestimmende Abstandssignal dar.

Eine nicht im Detail dargestellte Betrachtung des k-Vektors des Messstrahlenbündels M im Verlauf des zurückgelegten Weges liefert im Fall einer Verkippung des Messreflektors MR um die angegebene y-Achse eine resultierende Phasenverschiebung $\Phi_K$ im Messstrahlenbündel M gemäß der nachfolgenden Gleichung (1):

$$\Phi_K = 8 \cdot \sqrt{2} \cdot \pi \cdot R_y \cdot \Delta x \cdot \left(\frac{1}{\lambda_0} - \frac{1}{\lambda}\right) \qquad \text{(Gl. 1)}$$

mit:

$\Phi_K :=$ Phasenverschiebung bei Verkippung des Messreflektors MR um die y-Achse; 4 Wechselwirkungen des Mess-strahlenbündels mit dem Messreflektor; $\alpha = 45°$

$R_y :=$ Drehwinkel um die y-Achse

$\Delta x :=$ Entfernung der Auftreffpunkte A1, A2 von der Verkippungsachse in x-Richtung

$\lambda :=$ Ist-Wellenlänge

$\lambda_0 :=$ Nenn-Wellenlänge

Wie aus Gleichung (1) ersichtlich, resultiert bei einer derartigen Verkippung und einer Abweichung der Ist-Wellenlänge $\lambda$ von der Nenn-Wellenlänge $\lambda_0$ eine Phasenverschiebung $\Phi_K \neq 0$ auf Seiten des Messstrahlenbündels M. Eine derartige Phasenverschiebung $\Phi_K$ entsteht durch die wellenlängenabhängige Ablenkung am Gitter G und die damit verbundene Verschiebung des Auftreffortes A2 im Fall $\lambda \neq \lambda_0$. Sie verursacht im erzeugten Abstandssignal eine Abstandsänderung, obwohl sich in Bezug auf den zu messenden Abstand entlang der Messrichtung z nichts geändert hat. Im Fall der Parameter $R_y = 5\,\text{mrad}$, $\Delta x = 5\,\text{mm}$; $\lambda_0 = 780\,\text{nm}$ und $\lambda = \lambda_0 + 5\,\text{nm}$ würde mit Gleichung (1) eine Phasenverschiebung $\Phi_K = 1{,}15 \cdot 2\pi$ im Messstrahlenbündel M resultieren, was einen erheblichen Fehler bei der Abstandsbestimmung verursacht.

Die vorgeschlagene Vorrichtung aus der erwähnten Veröffentlichung ist demzufolge nicht unter allen Bedingungen unabhängig von möglicherweise resultierenden Wellenlängenänderungen; diese können z.B. durch sich ändernde Umgebungsbedingungen resultieren und bewirken bei Verkippungen des Messreflektors Fehlmessungen hinsichtlich des zu bestimmenden Abstands.

Der vorliegenden Erfindung liegt das Problem zugrunde, eine Vorrichtung zur hochgenauen interferentiellen Abstandsmessung zu schaffen, bei der der gemessene Abstand völlig unabhängig von der Wellenlänge der verwendeten Lichtquelle ist. Insbesondere sollen auch bei einer eventuellen Verkippung des Messreflektors keine Messfehler resultieren, wenn eine Abweichung der Ist-Wellenlänge von der Nenn-Wellenlänge vorliegt.

Diese Aufgabe wird erfindungsgemäß durch eine Vorrichtung mit den Merkmalen des Anspruchs 1 gelöst.

Vorteilhafte Ausführungen der erfindungsgemäßen Vorrichtung ergeben sich aus den Maßnahmen in den abhängigen Ansprüchen.

Die erfindungsgemäße Vorrichtung zur interferentiellen Abstandsmessung umfasst einen Messreflektor, eine Lichtquelle, ein Aufspaltelement, ein Vereinigungselement sowie eine Detektoranordnung. Über das Aufspaltelement wird ein von der Lichtquelle emittiertes Strahlenbündel in mindestens ein Messstrahlenbündel und mindestens ein Referenzstrahlenbündel aufgespalten, wobei das Messstrahlenbündel im weiteren Strahlverlauf mindestens zweimal den Messreflektor beaufschlagt. Am Vereinigungselement gelangen das Messstrahlenbündel und das Referenzstrahlenbündel zur interferierenden Überlagerung. Mittels der Detektoranordnung ist mindestens ein Abstandssignal aus den interferierenden Mess- und Referenzstrahlenbündeln bezüglich des Abstands zwischen dem Messreflektor und ein oder mehreren anderen Komponenten der Vorrichtung entlang einer Messrichtung erzeugbar, wobei der Messreflektor gegenüber zumindest einem Teil der Komponenten abstandsvariabel angeordnet ist. Das Aufspaltelement ist hierbei als Aufspaltgitter ausgebildet. Die Lichtquelle emittiert das Strahlenbündel parallel zur Oberfläche des Messreflektors in Richtung des Aufspaltgitters. Das Aufspaltgitter ist senkrecht zur Oberfläche des Messreflektors angeordnet. Die Strahlengänge des Mess- und Referenzstrahlenbündels zwischen dem Aufspaltgitter und dem Vereinigungselement verlaufen jeweils spiegelsymmetrisch zu einer Symmetrieebene, die senkrecht zur Oberfläche des Messreflektors orientiert ist. Im Strahlengang des Referenzstrahlenbündels und des Messstrahlenbündels sind zwischen dem Aufspaltgitter und dem Vereinigungselement jeweils mindestens zwei Umlenkelemente angeordnet, wobei über jedes Umlenkelement auf das einfallende Strahlenbündel entweder eine Umlenkwirkung entlang der Messrichtung oder entlang und senkrecht zur Messrichtung resultiert.

Es ist möglich, dass die Lichtquelle, das Aufspaltgitter, das Vereinigungselement und die Detektoranordnung zusammen mit weiteren Komponenten in einer Abtasteinheit angeordnet sind, welche gegenüber dem Messreflektor mindestens entlang der Messrichtung abstandsvariabel angeordnet ist.

Es kann vorgesehen werden, dass das Aufspaltgitter auf einem plattenförmigen Trägerelement angeordnet ist und das Trägerelement senkrecht zur Oberfläche des Messreflektors orientiert angeordnet ist.

Hierbei kann vorgesehen werden, dass über die Umlenkelemente

- ein darauf einfallendes kollimiertes Strahlenbündel ferner eine fokussierende Wirkung auf einen Linienfokus erfährt, wobei der Linienfokus sich entlang der Messrichtung erstreckt und
- auf ein darauf einfallendes divergierendes Strahlenbündel ferner eine kollimierende Wirkung resultiert.

Es ist möglich, dass die Umlenkelemente diffraktive Strukturen umfassen, die auf Trägerelementen angeordnet sind, welche senkrecht zum Messreflektor angeordnet sind.

Beispielsweise können die Umlenkelemente als reflektive Fresnel-Zylinderlinsen ausgebildet sein, wobei über die reflektiven Fresnel-Zylinderlinsen auf das einfallende Strahlenbündel neben einer fokussierenden Wirkung zusätzlich eine Umlenkwirkung entlang der Messrichtung resultiert. Ferner ist es möglich, dass über zwei der Umlenkelemente auf die einfallenden Strahlenbündel eine fokussierende Wirkung auf einen Linienfokus resultiert.

Desweiteren ist es möglich, dass die Umlenkelemente als transmittive Fresnel-Zylinderlinsen ausgebildet sind, die jeweils zusammen mit einem Reflektor an zwei Trägerelementen angeordnet sind, wobei

- die transmittiven Fresnel-Zylinderlinsen auf den einander zugewandten Seiten der Trägerelemente angeordnet sind und
- die Reflektoren auf den jeweils gegenüberliegenden Seiten der Trägerelemente angeordnet sind und deren reflektierende Seite in Richtung der transmittiven Fresnel-Zylinderlinsen orientiert ist, und
- die transmittiven Fresnel-Zylinderlinsen derart ausgebildet sind, dass ein darauf einfallendes kollimiertes Strahlenbündel eine linienförmige Fokussierung auf die reflektierende Seite der Reflektoren erfährt.

Alternativ können die Umlenkelemente auch als reflektive Off-Axis-Fresnel-Zylinderlinsen ausgebildet sind, die auf den einander zugewandten Seiten zweier Trägerelemente angeordnet sind.

Mit Vorteil ist vorgesehen, dass das Referenzstrahlenbündel zwischen dem Aufspaltgitter und dem Vereinigungselement ausschließlich in der Abtasteinheit propagiert.

Es ist ferner möglich, dass die Umlenkelemente als transmittive Fresnel-Zylinderlinsen ausgebildet sind, die auf gegenüberliegenden Seiten eines plattenförmigen Trägerelements angeordnet sind, das zwischen zwei äußeren plattenförmigen Trägerelementen platziert ist und an denen das Aufspaltgitter und ein Vereinigungselement angeordnet sind.

Hierbei kann vorgesehen sein, dass die Komponenten in der Abtasteinheit derart angeordnet und ausgebildet sind, dass

- das Messstrahlenbündel vom Aufspaltgitter in Richtung des Messreflektors propagiert und dort an einem ersten Auftreffort eine erste Reflexion in Richtung des ersten Umlenkelements in der Abtasteinheit erfährt und
- das Messstrahlenbündel dann am ersten Umlenkelement eine Umlenkung in Richtung eines zweiten Umlenkelements erfährt und
- das Messstrahlenbündel dann am zweiten Umlenkelement eine Umlenkung in Richtung des Messreflektors erfährt und dort an einem zweiten Auftreffort eine zweite Reflexion in Richtung des Vereinigungselements erfährt und
- das Referenzstrahlenbündel vom Aufspaltgitter in Richtung des ersten Umlenkelements propagiert und dort eine Umlenkung in Richtung des zweiten Umlenkelements erfährt und
- das Referenzstrahlenbündel am zweiten Umlenkelement eine Umlenkung in Richtung des Vereinigungselements erfährt.

In einer möglichen Ausführungsform ist vorgesehen, dass das Vereinigungselement als Vereinigungsgitter ausgebildet und senkrecht zur Oberfläche des Messreflektors angeordnet ist.

Als wichtiger Vorteil der erfindungsgemäßen Lösung resultiert eine völlige Unabhängigkeit der Abstandsmessung von eventuellen Wellenlängenänderungen. Dies ist darauf zurückzuführen, dass die zurückgelegten optischen Weglängen der interferierenden Mess- und Referenzstrahlenbündel für alle Abstände des Messreflektors identisch sind. Eventuelle Wellenlängenschwankungen beeinflussen daher die Abstandsmessung in der erfindungsgemäßen Vorrichtung weder im Normalbetrieb noch bei eventuellen Verkippungen des Messreflektors.

Weiterhin vorteilhaft erweist sich aufgrund der symmetrischen Strahlführung in der erfindungsgemäßen Vorrichtung, dass sich der effektive Messpunkt auf dem Messreflektor auch bei Abstandsänderungen lagemäßig nicht verschiebt, sondern stets mittig zwischen den Auftreffpunkten des Messstrahlenbündels auf dem Messreflektor liegt.

**Fortsetzung: Ursprüngliche Seite 9**

Schließlich ist noch als Vorteil der erfindungsgemäßen Vorrichtung anzuführen, dass darin breitbandige Lichtquellen wie z.B. LEDs verwendet werden können.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

Es zeigt

Figur 1        eine schematisierte Darstellung zur Erläuterung einer bekannten Vorrichtung gemäß dem Stand der Technik;

Figur 2     eine analoge Darstellung zu Figur 1, anhand der die erfindungsgemäße Vorrichtung erläutert wird;

Figur 3     eine schematisierte Darstellung des Strahlengangs eines ersten Ausführungsbeispiels der erfindungsgemäßen Vorrichtung in einer ersten Ansicht;

Figur 4     eine Schnittansicht des Strahlengangs des ersten Ausführungsbeispiels der erfindungsgemäßen Vorrichtung;

Figur 5     eine Draufsicht auf Trägerelemente des ersten Ausführungsbeispiels mit den darauf angeordneten Umlenkelementen;

Figur 6     eine schematisierte Darstellung zum Strahlengang des ersten Ausführungsbeispiels im Fall einer Messreflektor-Verkippung;

Figur 7     eine schematisierte Darstellung des Strahlengangs einer Variante des ersten Ausführungsbeispiels der erfindungsgemäßen Vorrichtung;

Figur 8     eine schematisierte Darstellung des Strahlengangs eines zweiten Ausführungsbeispiels der erfindungsgemäßen Vorrichtung in einer ersten Ansicht;

Figur 9a    eine schematisierte Darstellung des Strahlengangs des zweiten Ausführungsbeispiels der erfindungsgemäßen Vorrichtung in einer zweiten Ansicht;

Figur 9b    eine andere Darstellung des Strahlengangs der Ansicht aus Figur 9a;

Figur 10    eine Draufsicht auf Trägerelemente des zweiten Ausführungsbeispiels mit den dort angeordneten verschiedenen Umlenkelementen;

Figur 11    eine Draufsicht auf den Messreflektor des zweiten Ausführungsbeispiels mit den verschiedenen Auftrefforten des Messstrahlenbündels;

Figur 12    eine schematisierte Darstellung des Strahlengangs eines dritten Ausführungsbeispiels der erfindungsgemäßen Vorrichtung in einer ersten Ansicht;

Figur 13a   eine schematisierte Darstellung des Strahlengangs des dritten Ausführungsbeispiels der erfindungsgemäßen Vorrichtung in einer zweiten Ansicht;

Figur 13b   eine andere Darstellung des Strahlengangs der Ansicht aus Figur 13a;

Figur 14    eine Draufsicht auf Trägerelemente des dritten Ausführungsbeispiels mit den dort angeordneten verschiedenen Umlenkelementen;

Figur 15    eine Draufsicht auf den Messreflektor des dritten Ausführungsbeispiels mit den verschiedenen Auftrefforten des Messstrahlenbündels;

Figur 16    eine schematisierte Darstellung des Strahlengangs eines vierten Ausführungsbeispiels der erfindungsgemäßen Vorrichtung in einer ersten Ansicht;

Figur 17    eine Schnittansicht des Strahlengangs des vierten Ausführungsbeispiels der erfindungsgemäßen Vorrichtung;

Figur 18    mehrere Draufsichten auf verschiedene Elemente des vierten Ausführungsbeispiels.

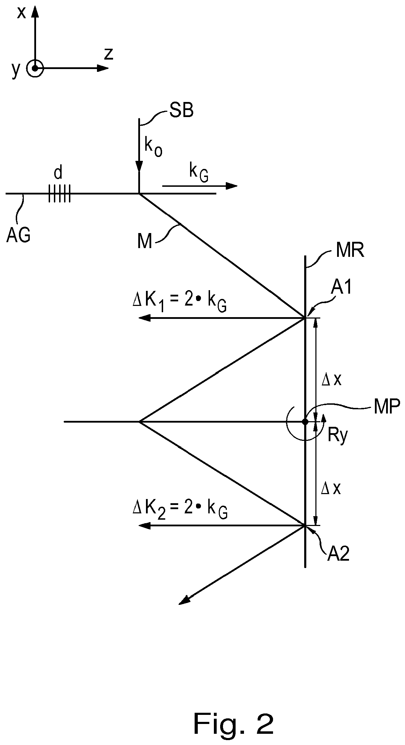

Bevor nachfolgend die einzelnen Ausführungsbeispiele der erfindungsgemäßen Vorrichtung zur interferentiellen Abstandsmessung im Detail beschrieben werden, seien zunächst einige grundsätzliche Überlegungen zur erfindungsgemäßen Vorrichtung anhand von Figur 2 erläutert.

Figur 2 zeigt hierbei eine Teil-Darstellung des Verlaufs des Messstrahlenbündels M in einer möglichen Ausführungsform der erfindungsgemäßen Vorrichtung analog zu Figur 1. Das von oben her senkrecht auf das Aufspaltgitter AG einfallende Strahlenbündel SB wird an diesem in ein Messstrahlenbündel M sowie ein - nicht gezeigtes - Referenzstrahlenbündel aufgespalten. Das Messstrahlenbündel M beaufschlagt auf den Auftrefforten A1, A2 in dieser Variante zwei Mal den Messreflektor MR, wird mehrere Male durch senkrecht zum Messreflektor MR stehende Umlenkelemente bzw. Gitter umgelenkt und gelangt schließlich zur interferierenden Überlagerung mit dem Referenzstrahlenbündel.

Der k-Vektor $k_0$ des einfallenden Strahlenbündels SB sei gegeben gemäß

$$k_0 = \frac{2\pi}{\lambda} \qquad\qquad \text{(Gl. 2.1)}$$

mit
$\lambda$ := Wellenlänge

Der Gittervektor $k_G$ des Aufspaltgitters AG sei gegeben gemäß

$$k_G = \frac{2\pi}{d} \qquad\qquad \text{(Gl. 2.2)}$$

mit:
d := Gitterperiode des Aufspaltgitters AG

Die z-Komponente $k_z$ des k-Vektors des auf den Messreflektor MR einfallenden Messstrahlenbündels M ergibt sich gemäß

$$k_z = \frac{2\pi}{d} \qquad\qquad \text{(Gl. 3.1)}$$

Die Änderung $\Delta k_z$ der z-Komponente des k-Vektors des Messstrahlenbündels M nach einer Reflexion am Messreflektor MR ergibt sich gemäß

$$\Delta k_z = \frac{4\pi}{d} \qquad\qquad \text{(Gl. 3.2)}$$

Im Fall einer Verschiebung und/oder Verkippung des Messreflektors MR um die y-Achse resultieren für das Messstrahlenbündel M an den Auftrefforten A1, A2 die Phasenverschiebungen $\Phi_1$, $\Phi_2$ gemäß

$$\Phi_1 = \Delta k_1 \cdot \Delta z_1 = \frac{4\pi}{d} \cdot (\Delta z - R_y \cdot \Delta x) \qquad \text{(Gl. 4.1)}$$

$$\Phi_2 = \Delta k_2 \cdot \Delta z_2 = \frac{4\pi}{d} \cdot (\Delta z + R_y \cdot \Delta x) \qquad \text{(Gl. 4.2)}$$

mit:

$\Phi_1$, $\Phi_2$ := Phasenverschiebungen $\Phi_1$, $\Phi_2$ des Messstrahlenbündels an den Auftrefforten A1, A2

$\Delta k_1$, $\Delta k_2$ := Änderung der z-Komponente des k-Vektors des Messstrahlenbündels am Messreflektor an den Auftrefforten A1, A2

$\Delta z_1$, $\Delta z_2$ := Positionsverlagerung des Messreflektors in z-Richtung an den Auftrefforten A1, A2

$\Delta z$ := Positionsverlagerung des Messreflektors in z-Richtung bei Verschiebung entlang der z-Achse

$R_y$ := Drehwinkel des Messreflektors um eine Verkippachse, die parallel zur y-Achse durch den Punkt MP läuft

$\Delta x$ := Abstand der Auftrefforte A1, A2 von der Verkippachse des Messreflektors entlang der x-Achse

Die gesamte resultierende Phasenverschiebung $\Phi$ ergibt sich dann gemäß

$$\Phi = \Phi_1 + \Phi_2$$

$$= \frac{4\pi}{d} \cdot 2\Delta z = \frac{8\pi}{d} \cdot \Delta z \qquad \text{(Gl. 5)}$$

In Gleichung 5 geht demzufolge im Unterschied zum eingangs diskutierten Stand der Technik (Gleichung 1) nicht die aktuelle Wellenlänge $\lambda$ ein. Die Unabhängigkeit der Abstandsbestimmung von der Wellenlänge $\lambda$ ist hierbei insbesondere auch für den Fall einer Verkippung des Messreflektors MR um die y-Achse gegeben, d.h. wenn für diesen Fall $\Delta z = 0$ gilt, so ergibt sich aus den Gleichungen (4.1), (4.2) und (5) $\Phi_K = 0$, da bei Addition der Phasenverschiebungen $\Phi_1$ und $\Phi_2$ der kippwinkelabhängige Term $R_y \cdot \Delta x$ wegfällt. Im Gegensatz hierzu wird der der kippwinkelabhängige Term im eingangs diskutierten Stand der Technik durch Gleichung (1) beschrieben.

Eine eventuelle Verkippung des Messreflektors MR um die y-Achse bewirkt demzufolge in der erfindungsgemäßen Vorrichtung keine Phasenverschiebung $\Phi_K$ auf Seiten des Messstrahlenbündels M. Die Abstandsmessung ist in der erfindungsgemäßen Vorrichtung damit in allen Fällen unabhängig von einer eventuellen Wellenlängenänderung.

Maßgeblich für diese Unabhängigkeit verantwortlich ist in der erfindungsgemäßen Vorrichtung, dass das auf das Aufspaltgitter AG einfallende Strahlenbündel SB parallel zum Messreflektor MR verläuft und alle weiteren Strahlumlenkungen in Richtung des Messreflektors MR ebenfalls durch senkrecht zum Messreflektor MR stehende Umlenkelemente respektive Gitter erfolgen. Dadurch werden einerseits bei einer Wellenlängenänderung der Lichtquelle die beiden Auftreffpunkte A1, A2 stets gegenläufig, d.h. symmetrisch, zum Messpunkt MP verschoben. Andererseits sind die z-Komponenten $k_z$ der k-Vektoren des Messstrahlenbündels M bei jedem Auftreffen auf den Messreflektor MR allein durch die Gitterkonstanten des Aufspaltgitters sowie der weiteren Gitter der verschiedenen Umlenkelemente gegeben und damit wellenlängenunabhängig. Folglich sind auch die Änderungen $\Delta k_1$, $\Delta k_2$ in Gleichung (4.1) und (4.2) und damit die Umsetzung der Verschiebungen $\Delta z_1$, $\Delta z_2$ in entsprechende Phasenverschiebungen $\Phi_1$, $\Phi_2$ jeweils wellenlängenunabhängig.

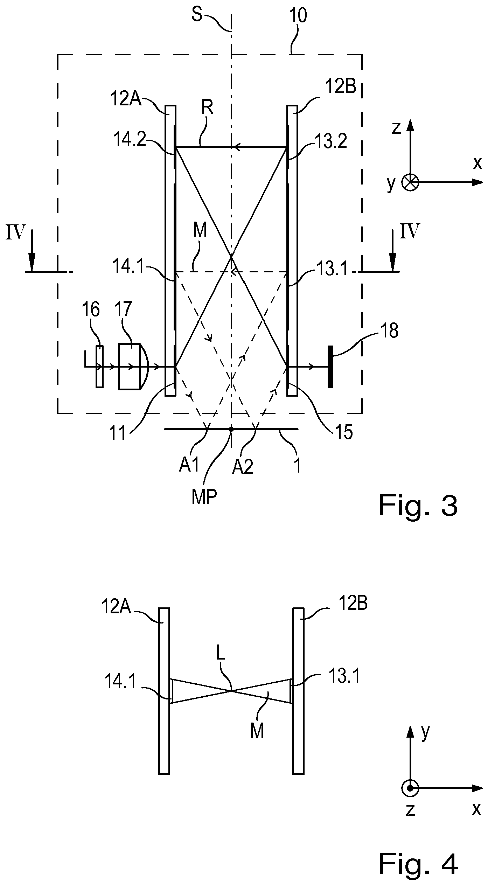

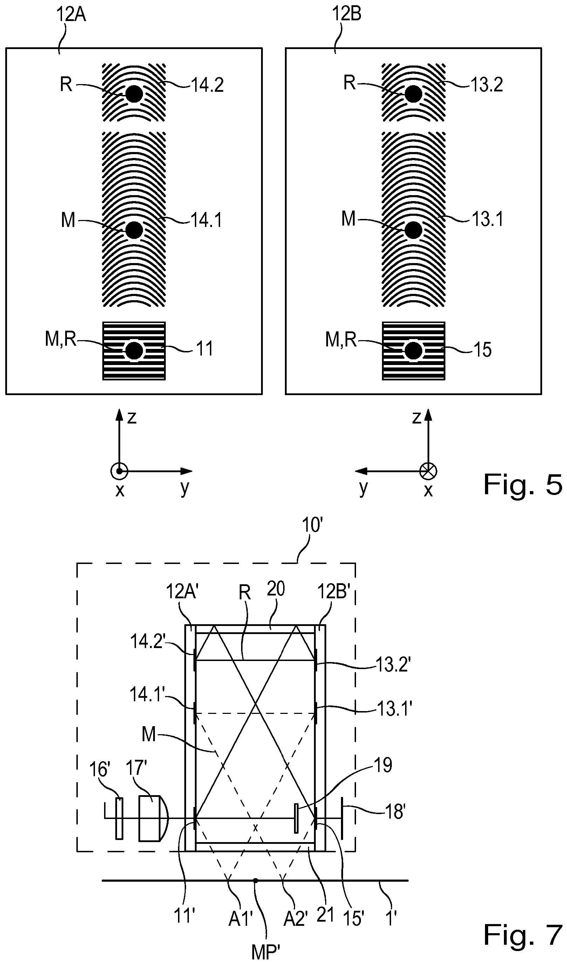

Anhand der Figuren 3, 4 und 5 wird nachfolgend ein erstes Ausführungsbeispiel der erfindungsgemäßen Vorrichtung zur interferentiellen Abstandsmessung im Detail beschrieben. Figur 3 zeigt eine schematisierte Darstellung des Strahlengangs dieses Ausführungsbeispiels in einer ersten seitlichen Ansicht, Figur 4 einen Teil des Strahlengangs in einer zweiten Ansicht und Figur 5 eine Draufsicht auf Trägerelemente dieser Vorrichtung mit den darauf angeordneten Umlenkelementen.

Die erfindungsgemäße Vorrichtung umfasst einen Messreflektor 1 sowie eine Reihe weiterer Komponenten 11 - 18, die im vorliegenden Ausführungsbeispiel in einer schematisiert angedeuteten Abtasteinheit 10 angeordnet sind. Zu den in der Abtasteinheit 10 vorgesehenen Komponenten 11 - 18 gehören eine Lichtquelle 16, eine Kollimatoroptik 17, eine Detektoranordnung 18 sowie zwei Trägerelemente 12A, 12B, an denen weitere Komponenten mit optischer Funktionalität angeordnet sind; hierzu gehören etwa ein Aufspaltgitter 11, Umlenkelemente 14.1, 14.2 am Trägerelement 12A und ein als Vereinigungsgitter 15 ausgebildetes Vereinigungselement sowie weitere Umlenkelemente 13.1, 13.2 am Trägerelement 12B.

Der Messreflektor 1 ist gegenüber der Abtasteinheit bzw. gegenüber zumindest einem Teil der anderen Komponenten 11 - 18 entlang einer Messrichtung abstandsvariabel angeordnet; die Messrichtung wird in den Figuren jeweils mit der Koordinate z bezeichnet. Beispielsweise können der Messreflektor 1 einerseits und die Abtasteinheit 10 andererseits mit - nicht dargestellten - Maschinenkomponenten verbunden sein, die entlang der Messrichtung z gegeneinander beweglich sind. Über die erfindungsgemäße Vorrichtung zur interferentiellen Abstandsmessung werden Abstandssignale bezüglich des Abstands bzw. bezüglich Abstandsänderungen zwischen dem Messreflektor 1 und der Abtasteinheit bzw. zumindest einem Teil der anderen Komponenten 11 - 18 entlang der Messrichtung z erzeugt. Diese Abstandssignale können dann von einer nachgeordneten, ebenfalls nicht dargestellten Maschinensteuerung weiterverarbeitet werden.

Alternativ zur Anordnung aller Komponenten 11 - 18 in einer gemeinsamen Abtasteinheit 10 kann im Rahmen der vorliegenden Erfindung z.B. auch vorgesehen sein, die Lichtquelle und/oder die Detektoranordnung örtlich getrennt von der Abtasteinheit anzuordnen und über Lichtwellenleiter mit der Abtasteinheit zu verbinden, in der die weiteren Komponenten angeordnet sind etc..

Zur Erzeugung der abstandsabhängigen Abstandssignale entlang der Messrichtung z wird in der erfindungsgemäßen Vorrichtung ein interferentielles optisches Prinzip genutzt. Der hierzu vorgesehene Abtaststrahlengang des ersten Ausführungsbeispiels wird nachfolgend im Detail erläutert.

Eine Lichtquelle 16, beispielsweise ausgebildet als punktförmiger oder nahezu punktförmiger Halbleiterlaser, emittiert ein Strahlenbündel, das von einer Kollimationsoptik 17 kollimiert wird; als alternative Lichtquelle kommt auch eine LED an dieser Stelle in Betracht. Das kollimierte Strahlenbündel trifft dann auf ein Aufspaltelement auf, das als Aufspaltgitter 11 in Form eines Transmissions-Phasengitters ausgebildet ist. Wie aus Figur 3 ersichtlich, ist das Aufspaltgitter senkrecht zum Messreflektor 1 angeordnet, d.h. die Gitterebene des Aufspaltgitters steht senkrecht auf der Oberfläche des Messreflektors 1. Die Lichtquelle 16 emittiert das abgegebene Strahlenbündel parallel zur Oberfläche des Messreflektors 1 in Richtung des Aufspaltgitters 11. Diese Richtung ist in den Figuren als x-Richtung bezeichnet;

nachfolgend sei hierbei auch die Rede von der Lichteinfallsrichtung x.

Am Aufspaltgitter 11 wird das von der Lichtquelle 16 her einfallende, kollimierte Strahlenbündel in ein Messstrahlenbündel M und ein Referenzstrahlenbündel R aufgespalten. Das Aufspaltgitter 11 spaltet hierzu das einfallende Strahlenbündel in +1. und -1. Beugungsordnungen auf, wobei die -1. Beugungsordnung nachfolgend als Messstrahlenbündel M fungiert und die +1. Beugungsordnung als Referenzstrahlenbündel R. Im dargestellten Ausführungsbeispiel wird vom Aufspaltgitter 11 die 0. Beugungsordnung möglichst vollständig unterdrückt.

Das Messstrahlenbündel M propagiert vom Aufspaltgitter 11 sodann in Richtung des Messreflektors 1 und erfährt dort an einem ersten Auftreffort A1 eine erste Reflexion in Richtung eines ersten Umlenkelements 13.1 in der Abtasteinheit 10. Das an einem Trägerelement 12B angeordnete erste Umlenkelement 13.1 ist als reflektive Fresnel-Zylinderlinse mit zusätzlicher Umlenkfunktion in Messrichtung z ausgebildet und übt bestimmte optische Wirkungen auf das darauf einfallende Messstrahlenbündel M aus.

So erfährt das auf das erste Umlenkelement 13.1 einfallende Messstrahlenbündel M hierbei eine Umlenkwirkung entlang der Messrichtung z. Dies bedeutet, dass in der xz-Ebene das von schräg links unten auf das erste Umlenkelement 13.1 einfallende Messstrahlenbündel M wieder parallel zum auf das Aufspaltgitter 11 einfallende Beleuchtungsstrahlenbündel ausgerichtet wird. Das vom ersten Umlenkelement 13.1 umgelenkte bzw. reflektierte Messstrahlenbündel M propagiert somit parallel zur Oberfläche des Messreflektors 1 entgegengesetzt zur Lichteinfallsrichtung x in Richtung des zweiten Umlenkelements 14.1 am gegenüberliegenden Trägerelement 12A.

Neben der Umlenkwirkung entlang der Messrichtung z übt das erste Umlenkelement 13.1 auf das darauf einfallende kollimierte Messstrahlenbündel M eine weitere optische Wirkung aus. So erfährt das kollimierte Messstrahlenbündel M über das erste Umlenkelement 13.1 ferner eine fokussierende Wirkung auf einen Linienfokus L hin, d.h. das kollimierte Messstrahlenbündel M wird über das erste Umlenkelement 13.1 linienförmig fokussiert. Der resultierende Linienfokus L erstreckt sich hierbei - wie insbesondere aus Figur 4 ersichtlich - entlang der Messrichtung z und liegt genau in der Mitte zwischen den beiden Trägerelementen 12A, 12B.

Die beiden senkrecht zum Messreflektor 1 orientierten Trägerelemente 12A, 12B sind im vorliegenden Ausführungsbeispiel als Glasplatten ausgebildet. Aufgrund der Orientierung der beiden Trägerelemente 12A, 12B sind damit alle darauf angeordneten Elemente, d.h. die verschiedenen Umlenkelemente 13.1, 13.2, 14.1, 14.2 sowie die Aufspalt- und Vereinigungsgitter 11, 15, ebenfalls senkrecht zur Oberfläche des Messreflektors 1 angeordnet.

Wie aus Figur 3 ersichtlich, propagiert das Messstrahlenbündel M entgegengesetzt zur Lichteinfallsrichtung x dann zu einem zweiten Umlenkelement 14.1, das am gegenüberliegenden Trägerelement 12A angeordnet ist. Das zweite Umlenkelement 14.1 ist im vorliegenden Ausführungsbeispiel ebenfalls als Fresnel-Zylinderlinse mit zusätzlicher Umlenkfunktion in z-Richtung ausgebildet, die identisch zur Fresnel-Zylinderlinse des ersten Umlenkelements 13.1 ist.

Über das zweite Umlenkelement 14.1 wird zum einen wieder eine Umlenkwirkung auf das darauf einfallende Messstrahlenbündel M entlang der Messrichtung z in der xz-Ebene ausgeübt. Das von rechts auf das zweite Umlenkelement 14.2 einfallende Messstrahlenbündel wird dabei vom zweiten Umlenkelement 14.2 nach rechts unten in Richtung des Messreflektors 1 umgelenkt; dort trifft es an einem zweiten Auftreffort A2 erneut auf den Messreflektor 1. Der erste und zweite Auftreffort A1, A2 des Messstrahlenbündels M auf dem Messreflektor 1 liegen in der Lichteinfallsrichtung x voneinander beabstandet.

Neben einer derartigen Umlenkwirkung resultiert auch über das zweite Umlenkelement 14.2 eine weitere optische Wirkung auf das darauf einfallende Messstrahlenbündel M. Wie aus Figur 4 ersichtlich propagiert ab dem Linienfokus L ein divergierendes Messstrahlenbündel M in Richtung des zweiten Umlenkelements 14.1. Das zweite Umlenkelement 14.1 übt auf das einfallende divergierende Messstrahlenbündel M neben der erwähnten Umlenkwirkung ferner eine kollimierende Wirkung aus, d.h. in Richtung des zweiten Auftrefforts A2 auf dem Messreflektor 1 propagiert wieder ein kollimiertes Messstrahlenbündel. M.

Am zweiten Auftreffort A2 am Messreflektor 1 erfährt das Messstrahlenbündel M eine zweite Reflexion und propagiert schließlich in Richtung des Vereinigungsgitters 15 in der Abtasteinheit 10.

Das am Aufspaltgitter 11 als +1. Beugungsordnung resultierende Referenzstrahlenbündel R propagiert zunächst in Richtung eines dritten Umlenkelements 13.2, das am Trägerelement 12B in Messrichtung z oberhalb des ersten Umlenkelements 13.1 angeordnet ist. Das dritte Umlenkelement 13.2 ist ebenfalls als Fresnel-Zylinderlinse mit zusätzlicher Umlenkfunktion in z-Richtung ausgebildet, die wiederum identisch zu den Fresnel-Zylinderlinsen des ersten und zweiten Umlenkelements 13.1, 14.1 ist. Das dritte Umlenkelement 13.2 übt aufgrund der identischen Ausbildung wie das erste Umlenkelement 13.1 und aufgrund identischer Einfallswinkel des Referenzstrahlenbündels R auf das dritte Umlenkelement 13.2 und des Messstrahlenbündels M auf das erste Umlenkelement 13.1 die identischen optischen Wirkungen auf das einfallende Referenzstrahlenbündel R aus wie das erste Umlenkelement 13.1 auf das einfallende Messstrahlenbündel M. Neben der Umlenkwirkung entlang der Messrichtung z resultiert demzufolge darüber die oben erwähnte fokussierende Wirkung auf einen Linienfokus in der Mitte zwischen den Trägerelementen 12A, 12B auf das Referenzstrahlenbündel R.

Vom dritten Umlenkelement 13.2 propagiert das derart beeinflusste Referenzstrahlenbündel R sodann zu einem vierten Umlenkelement 14.2, das in Messrichtung z oberhalb des zweiten Umlenkelements 14.1 am Trägerelement 12A angeordnet ist. Als viertes Umlenkelement 14.2 fungiert wie im Fall der anderen drei Umlenkelemente 13.1, 13.2, 14.1 eine reflektive Fresnel-Zylinderlinse mit zusätzlicher Umlenkfunktion in z-Richtung, die identisch zu diesen drei Umlenkelementen 13.1, 13.2, 14.1 ausgebildet ist. Am vierten Umlenkelement 14.2 erfährt das darauf entgegen der Lichteinfallsrichtung x einfallende Referenzstrahlenbündel R demzufolge eine Umlenkwirkung nach rechts unten in Richtung des Vereinigungsgitters 15. Ferner wird das divergent auf das vierte Umlenkelement 14.2 einfallende Referenzstrahlenbündel R von diesem kollimiert, d.h. in Richtung des Vereinigungsgitters 15 propagiert das kollimierte Referenzstrahlenbündel R.

Wie aus der Beschreibung des Strahlengangs des Referenzstrahlenbündels R und den zugehörigen Figuren ersichtlich, propagiert in diesem Ausführungsbeispiel das Referenzstrahlenbündel R zwischen dem Aufspaltgitter 11 und dem Vereinigungsgitter 15 ausschließlich in der Abtasteinheit 10.

Am Vereinigungsgitter 15 treffen das Referenz- und Messstrahlenbündel R, M aufgrund der gewählten identischen Ausbildung der Umlenkelemente 13.1, 13.2, 14.1, 14.2 und deren vorgesehener Anordnung in der Abtasteinheit 10 unter entgegengesetzt symmetrischen Einfallswinkeln auf und kommen dort zur interferierenden Überlagerung.

Über die dem Vereinigungsgitter 15 nachgeordnete Detektoranordnung 18 kann im Fall von Abstandsänderungen zwischen dem Messreflektor 1 und der Abtasteinheit 10 entlang der Messrichtung z ein periodisches Abstandssignal erfasst werden, das zur Weiterverarbeitung zur Verfügung steht. Um hierbei auch Informationen bzgl. der Richtung einer Abstandsänderung verfügbar zu haben, ist die Erzeugung mehrerer phasenverschobener Abstandssignale vorteilhaft. So können beispielsweise drei um jeweils 120° phasenverschobene Abstandssignale oder aber vier um jeweils 90° zueinander phasenverschobene Abstandssignale erzeugt werden. Zur Erzeugung phasenverschobener Abstandssignale stehen grundsätzlich verschiedene bekannte Möglichkeiten zur Verfügung, die jeweils in der erfindungsgemäßen Vorrichtung zum Einsatz kommen können.

So lassen sich etwa drei um 120° phasenverschobene Abstandssignale erzeugen, indem das Steg-Lücke-Verhältnis und die Ätztiefe bzw. der Phasenhub des Vereinigungsgitters 15 geeignet gewählt wird.

Eine Erzeugung von vier um 90° phasenverschobenen Abstandssignalen ist über die Erzeugung eines Vernierstreifenmusters in der Detektionsebene und der Anordnung eines sog strukturierten Detektors in der Detektoranordnung 18 möglich. In diesem Fall wäre die Teilungsperiode des Vereinigungsgitters 15 geringfügig abweichend von der Teilungsperiode des Aufspaltgitters 11 zu wählen.

Schließlich ist eine Erzeugung von vier um 90° phasenverschobenen Abstandssignalen auch polarisationsoptisch realisierbar. Hierzu wären geeignete polarisationsoptische Bauelemente in den Strahlengängen des Messstrahlenbündels M und des Referenzstrahlenbündels R anzuordnen.

Zu den drei angedeuteten Möglichkeiten, in der erfindungsgemäßen Vorrichtung mehrere phasenverschobene Abstandssignale zu erzeugen, sei an dieser Stelle ausdrücklich auf die DE 10 2010 003 157 A1 verwiesen. Die dort beschriebenen Maßnahmen können in Bezug auf die Erzeugung phasenverschobener Abstandssignale auch in der vorliegenden Erfindung genutzt werden.

Aufgrund des beschriebenen Abtaststrahlengangs der erfindungsgemäßen Vorrichtung ist eine völlige Unabhängigkeit der Abstandsmessung von der Lichtquellen-Wellenlänge gewährleistet, da die zurückgelegten optischen Weglängen des Messstrahlenbündels M und des Referenzstrahlenbündels R für alle Abstände des Messreflektors 1 von der Abtasteinheit 10 gleich sind. Eventuell resultierende Wellenlängenänderungen beeinflussen die aus den resultierenden Abstandssignalen generierten Positionswerte nicht, insbesondere auch nicht im Fall einer eventuellen Verkippung des Messreflektors 1.

Wegen der Spiegelsymmetrie des Abtaststrahlengangs in der xz-Ebene zu einer mittigen Symmetrieebene S zwischen den beiden Trägerelementen 12A, 12B verschiebt sich bei Abstandsänderungen entlang der Messrichtung z zudem der effektive Messpunkt MP auf dem Messreflektor 1 nicht. Die Symmetrieebene S ist gemäß Figur 1 wie die Trägerelemente 12A, 12B senkrecht in Bezug auf den Messreflektor 1 orientiert. Wie aus Figur 3 ferner ersichtlich, liegt der effektive Messpunkt MP in Lichteinfallsrichtung x mittig zwischen den beiden Auftrefforten A1, A2 des Messstrahlenbündels M auf dem Messreflektor 1.

In einer möglichen konkreten Ausführung des ersten Ausführungsbeispiels der erfindungsgemäßen Vorrichtung wird eine Lichtquelle 16 verwendet, die Strahlung mit einer Wellenlänge $\lambda$ = 850nm emittiert; die Teilungsperioden des Aufspaltgitters 11 und des Vereinigungsgitters 15 betragen jeweils 960nm. Auch die effektive Ablenkung der Umlenkelemente 13.1, 13.2, 14.1, 14.2 in z-Richtung, d.h. der fokussierenden Elemente mit Umlenkfunktion, entspricht an jeder Stelle einem Gitter mit einer Teilungsperiode von 960nm. Der Abstand der beiden Trägerelemente 12A, 12B in x-Richtung wird mit 12mm gewählt. Für die periodischen Abstandssignale resultiert im Fall einer Abstandsänderung zwischen dem Messreflektor 1 und der Abtasteinheit 10 eine Signalperiode der Abstandssignale von 240nm.

Sowohl im vorliegenden ersten Ausführungsbeispiel wie auch in den nachfolgenden Ausführungsbeispielen der erfindungsgemäßen Vorrichtung ist jeweils vorgesehen, dass die Umlenkelemente diffraktive Strukturen bzw. Gitterteilungen umfassen, die jeweils senkrecht zum Messreflektor 1 angeordnet sind. Im Detail unterscheiden sich die jeweils vorgesehenen diffraktiven Strukturen der verschiedenen Varianten, wie dies nachfolgend im Einzelnen noch erläutert wird.

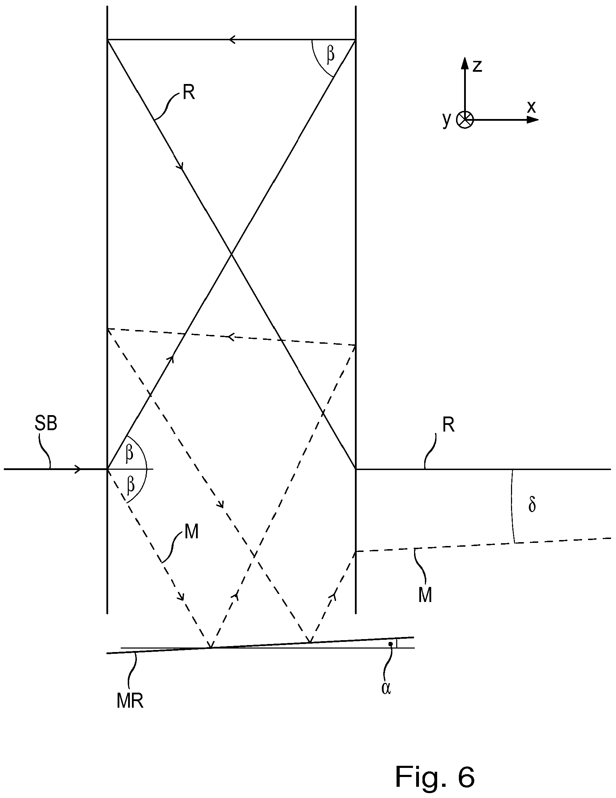

Anhand von Figur 6 sei nachfolgend noch veranschaulicht, wie sich beim ersten Ausführungsbeispiel der erfindungsgemäßen Vorrichtung die Ausrichtung des Messstrahlenbündels M gegenüber dem Referenzstrahlenbündel R im Fall einer Verkippung des Messreflektors MR um die y-Achse verändert. Dargestellt ist hier in schematischer Form der Strahlengang des Mess- und Referenzstrahlenbündels bei einer Verkippung des Messreflektors MR um den Kippwinkel $\alpha$.

In der Figur 6 bezeichnen $\beta$, $\alpha$ und $\delta$ die nachfolgenden Größen:

$\beta$ := Beugungswinkel der Umlenkelemente bzw. der hierzu genutzten diffraktiven Strukturen

$\alpha$ := Kippwinkel des Messreflektors bei Verkippung um die y-Achse

$\delta$ := Winkel zwischen Messstrahlenbündel M und Referenzstrahlenbündel R nach dem Vereinigungsgitter

Für den Winkel $\delta$ ergibt sich hierbei:

$$\delta = 2 \cdot N \cdot \sin\beta \cdot \alpha^2 \qquad \text{(Gl. 6)}$$

mit:

$\alpha$, $\beta$, $\delta$ wie vorab definiert und

N := Anzahl der Wechselwirkungen des Messstrahlenbündels mit dem Messreflektor (N = 2 im ersten Ausführungsbeispiel; N = 4 im zweiten und dritten Ausführungsbeispiel)

Gemäß Gleichung 6 hängt die Strahlrichtungsdifferenz zwischen dem Messstrahlenbündel M und dem Referenzstrahlenbündel R nur in höherer Ordnung von einer Verkippung des Messreflektors MR um die y-Achse ab. Dies bedeutet, dass sich eine derartige Verkippung des Messreflektors MR um die y-Achse im vorliegenden Ausführungsbeispiel der erfindungsgemäßen Vorrichtung nur gering auf den Modulationsgrad und die Amplitude der erzeugten Abstandssignale auswirkt. Eine mögliche Verkippung des Messreflektors MR um die y-Achse muss daher nicht mittels abbildender optischer Elemente im Strahlengang des Messstrahlenbündels M kompensiert werden; dies ist im vorliegenden Ausführungsbeispiel lediglich in Bezug auf eine eventuelle Verkippung des Messreflektors um die x-Achse erforderlich.

Eine geringfügig abgewandelte Variante des ersten Ausführungsbeispiels der erfindungsgemäßen Vorrichtung zur interferentiellen Abstandsmessung ist in Figur 7 schematisiert dargestellt. Im Folgenden seien lediglich die maßgeblichen Unterschiede zum ersten Ausführungsbeispiel erläutert.

So ist nunmehr zum einen in der Abtasteinheit 10' in der Verbindungslinie zwischen der Lichtquelle 16' und der Detektoranordnung 18' eine Blende 19 angeordnet. Die Blende 19 verhindert, dass eine ggf. am Aufspaltgitter 11' resultierende 0. Beugungsordnung in Richtung des Vereinigungsgitters 15' gelangt und durch den dadurch bedingten Gleichlichtanteil die Modulationsgrade der Abstandssignale verschlechtert werden.

Ferner ist auf der Unterseite der Abtasteinheit 10', die dem Messreflektor 1' zugewandt ist, ein Deckglas 21 vorgesehen und auf der entgegengesetzten Seite der Abtasteinheit 10' ein Rückflächenreflektor 20. Das wie im ersten Ausführungsbeispiel ausschließlich in der Abtasteinheit 10' propagierende Referenzstrahlenbündel R wird nach der Aufspaltung am Aufspaltgitter 11' zunächst ein erstes Mal am Rückflächenreflektor 20 reflektiert, bevor es auf das dritte Umlenkelement 13.2'auftrifft. Ferner erfolgt eine nochmalige Umlenkung des Referenzstrahlenbündels R am Rückflächenreflektor 20 zwischen dem vierten Umlenkelement 14.2' und dem Vereinigungsgitter 15'.

Als Vorteil einer derartigen Variante des ersten Ausführungsbeispiels der erfindungsgemäßen Vorrichtung wäre zu erwähnen, dass lediglich eine Kippkompensation um die x-Achse mittels abbildender Elemente notwendig ist. Modulationsgrade und Signalamplituden der Abstandssignale hängen dann nur schwach von eventuellen Kippungen Rx, Ry des Messreflektors 1' ab.

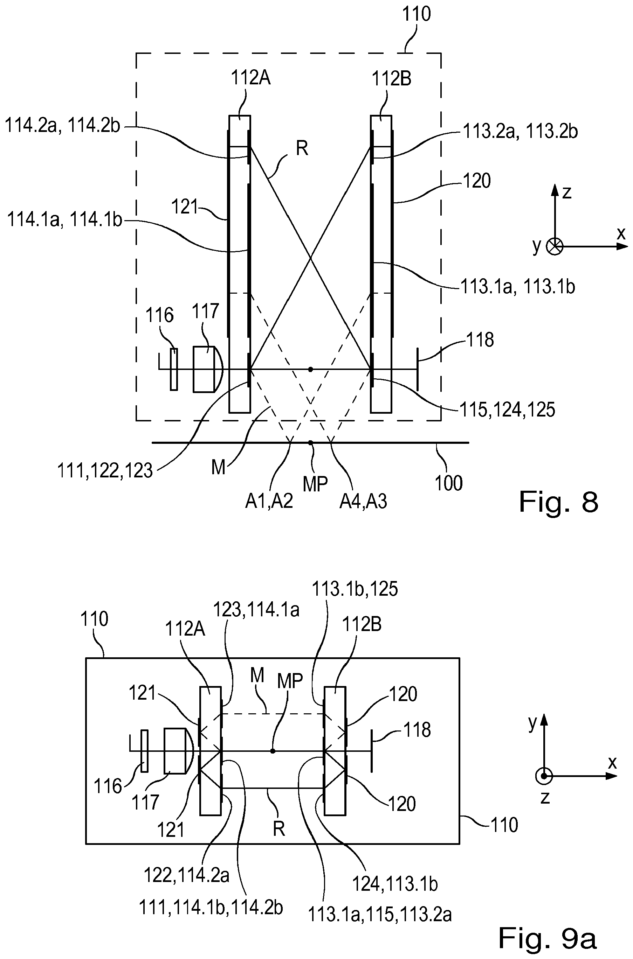

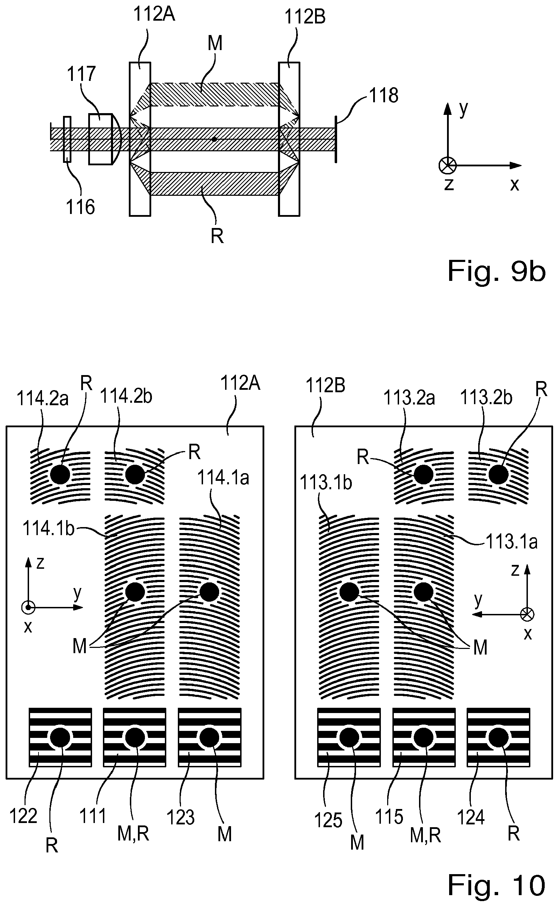

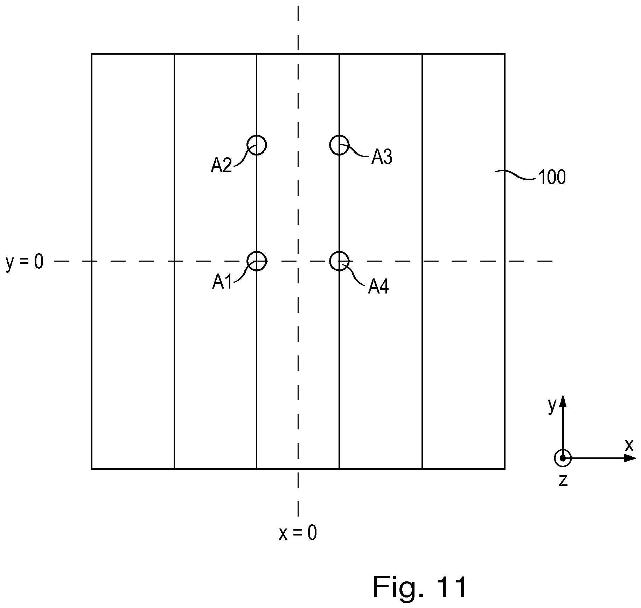

Ein zweites Ausführungsbeispiel der erfindungsgemäßen Vorrichtung zur interferentiellen Abstandsmessung ist in den Figuren 8, 9a, 9b, 10 und 11 dargestellt. Die Figuren 8, 9a und 9b zeigen jeweils eine schematisierte Darstellung des Strahlengangs dieses Ausführungsbeispiels in unterschiedlichen Ansichten, Figur 10 eine Draufsicht auf die Trägerelemente mit den darauf angeordneten transmittiven Fresnel-Zylinderlinsen und den darauf einfallenden Mess- bzw. Referenzstrahlenbündeln M, R und Figur 11 eine Draufsicht auf den Messreflektor mit den verschiedenen Auftrefforten des Messstrahlenbündels. Im Folgenden werden i.w. wieder nur die maßgeblichen Unterschiede zum ersten Ausführungsbeispiel erläutert.

Anstelle einer detaillierten Beschreibung des Strahlengangs des Messstrahlenbündels M und des Referenzstrahlenbündels R ist nachfolgend angegeben, in welcher Reihenfolge die verschiedenen Elemente der erfindungsgemäßen Vorrichtung vom Messstrahlenbündel M sowie vom Referenzstrahlenbündel R zwischen dem Aufspaltgitter 111 und dem Vereinigungsgitter 115 im zweiten Ausführungsbeispiel beaufschlagt werden. Hierzu sei desweiteren auch auf die Figuren 8, 9a, 9b, 10 und 11 verwiesen.

Strahlengang Messstrahlenbündel M:

Aufspaltgitter 111 → Messreflektor 100, Auftreffort A1 → Umlenkelement 113.1 a → Reflektor 120 → Umlenkelement 113.1b → Messreflektor 100, Auftreffort A2 → Umlenkelement 123 → Umlenkelement 125 → Messreflektor 100, Auftreffort A3 → Umlenkelement 114.1a → Reflektor 121 → Umlenkelement 114.1b → Messreflektor 100, Auftreffort A4 → Vereinigungsgitter 115

Strahlengang Referenzstrahlenbündel R:

Aufspaltgitter 111 → Umlenkelement 113.2a → Reflektor 120 → Umlenkelement 113.2b →Umlenkelement 122 → Umlenkelement 124 → Umlenkelement 114.2a →Reflektor 121 → Umlenkelement 114.2b → Vereinigungsgitter 115

Wie aus dieser Strahlengangcharakterisierung und den zugehörigen Figuren ersichtlich ist, unterscheiden sich insbesondere die im zweiten Ausführungsbeispiel eingesetzten Umlenkelemente in den Strahlengängen des Mess- und Referenzstrahlenbündels M, R von denjenigen des ersten Ausführungsbeispiels.

Als Umlenkelemente 113.1a, 113.1b, 113.2a, 113.2b, 114.1a, 114.1b, 114.2a, 114.2b dienen nunmehr zum einen transmittive Fresnel-Zylinderlinsen, die jeweils zusammen mit einem Reflektor 120, 121 an den Trägerelementen 112A, 112B angeordnet sind. Diese, als transmittive Fresnel-Zylinderlinsen ausgebildeten Umlenkelemente 113.1a, 113.1b, 113.2a, 113.2b, 114.1a, 114.1b, 114.2a, 114.2b sind hierbei auf den einander zugewandten Seiten der Trägerelemente 112A, 112B angeordnet, die Reflektoren 120, 121 auf den jeweils gegenüberliegenden Seiten der Trägerelemente 112A, 112B. Die reflektierende Seite der Reflektoren 120, 121 ist jeweils in Richtung der als transmittive Fresnel-Zylinderlinsen ausgebildeten Umlenkelemente 113.1a, 113.1b, 113.2a, 113.2b, 114.1a, 114.1 b, 114.2a, 114.2b orientiert.
Über diese Umlenkelemente 113.1a, 113.1b, 113.2a, 113.2b, 114.1a, 114.1b, 114.2a, 114.2b des zweiten Ausführungsbeispiels werden zum einen wieder definierte Umlenkwirkungen auf die darauf einfallenden Strahlenbündel (Messstrahlenbündel M, Referenzstrahlenbündel R) ausgeübt. Im Unterschied zum obigen Ausführungsbeispiel resultiert nunmehr jedoch über die Umlenkelemente 113.1a, 113.1b, 113.2a, 113.2b, 114.1a, 114.1b, 114.2a, 114.2b eine Umlenkwirkung auf die einfallenden Strahlenbündel in y-Richtung als auch Messrichtung z. Es liegen also Umlenkwirkungen entlang der Messrichtung z als auch senkrecht zur Messrichtung z vor.

Analog hierzu haben auch die Umlenkelemente 113.2a, 113.2b, 114.2a, 114.2b im Strahlengang des Referenzstrahlenbündels R entsprechende Umlenkwirkungen in z-Richtung und y-Richtung.

Neben der optischen Umlenkwirkung resultiert über die Umlenkelemente 113.1a, 113.1b, 113.2a, 113.2b, 114.1a, 114.1b, 114.2a, 114.2b des zweiten Ausführungsbeispiels wie oben eine fokussierende Wirkung bzw. eine kollimierende Wirkung auf die darauf einfallenden Strahlenbündel. So werden etwa kollimiert auf die Umlenkelemente 113.1a, 113.2a, 114.1a, 114.2a einfallende Strahlenbündel linienförmig auf den jeweils zugeordneten Reflektor 120, 121 fokussiert; der Linienfokus erstreckt sich hierbei wiederum entlang der Messrichtung z. Divergent auf die Umlenkelemente 113.1b, 113.2b, 114.1b, 114.2b einfallende Strahlenbündel werden darüber kollimiert.

Zusätzlich sind im Vergleich zum ersten Ausführungsbeispiel auf den Trägerelementen 112A, 112B noch weitere Umlenkelemente 122, 123 bzw. 124, 125 angeordnet, welche als Reflexionsgitter ausgebildet sind und die vom Messstrahlenbündel M sowie vom Referenzstrahlenbündel R wie angegeben beaufschlagt werden. Die Umlenkelemente 122, 123 bzw. 124, 125 bewirken im vorliegenden Ausführungsbeispiel lediglich eine Umlenkung der darauf einfallenden Strahlenbündel (Messstrahlenbündel M, Referenzstrahlenbündel R) in der xz-Ebene, d.h. entlang der Messrichtung z; eine fokussierende bzw. kollimierende optische Wirkung üben diese Umlenkelemente 122 - 125 auf die darauf einfallenden Strahlenbündel nicht aus.

Insgesamt beaufschlagt das Messstrahlenbündel M aufgrund des vorgesehenen Strahlengangs in diesem Ausführungsbeispiel somit zwischen dem Aufspaltgitter 111 und dem Vereinigungsgitter 115 viermal den Messreflektor 100 auf den Auftrefforten A1 - A4 als auch die vier Umlenkelemente 113.1a, 113.1b, 114.1a, 114.1b. Dies hat zur Folge, dass im Vergleich zum ersten Ausführungsbeispiel die resultierende Signalperiode der Abstandssignale halbiert wird, d.h. es steht eine höhere Messauflösung aufgrund des gewählten Strahlengangs zur Verfügung.

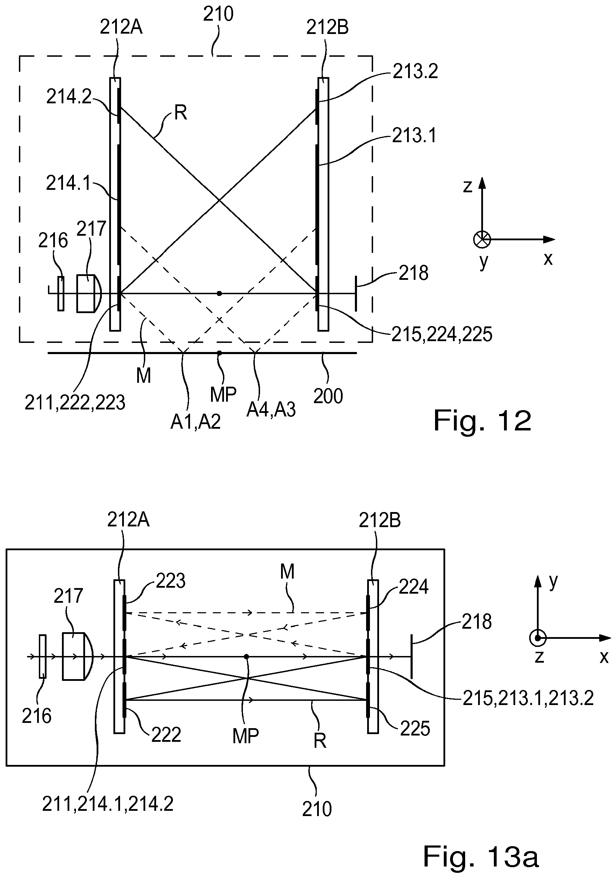

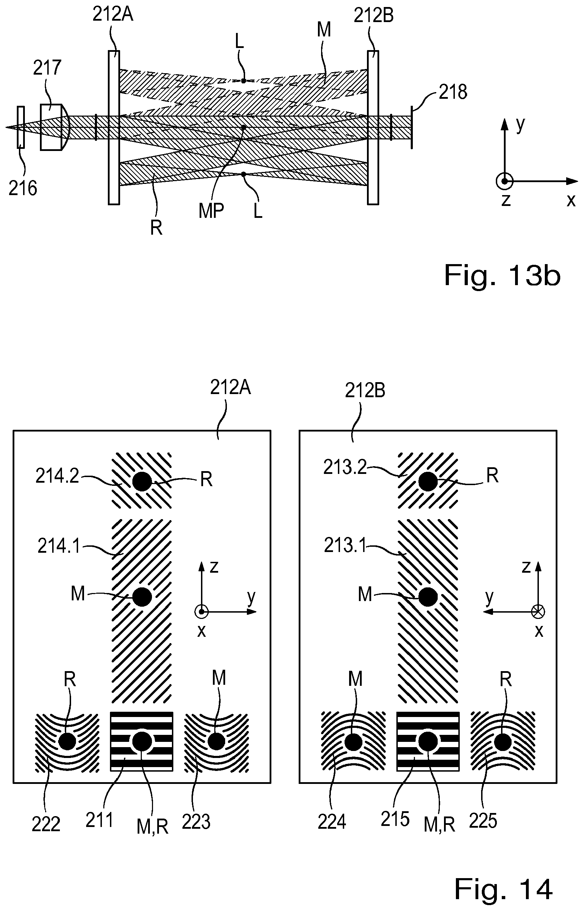

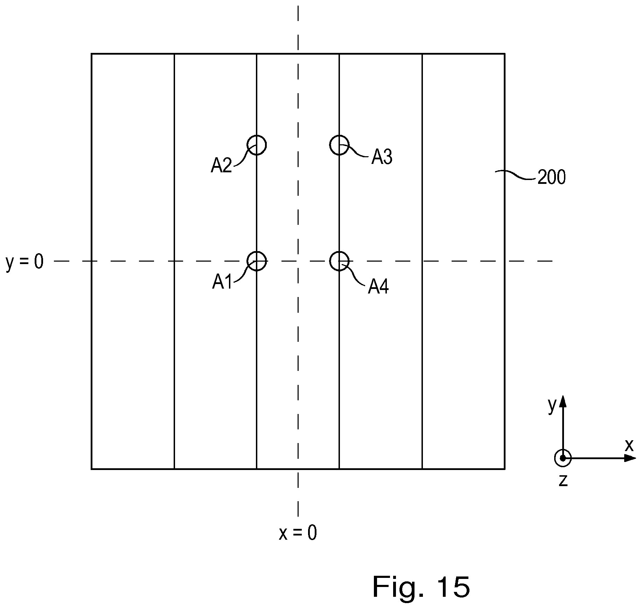

Ein drittes Ausführungsbeispiel der erfindungsgemäßen Vorrichtung zur interferentiellen Abstandsmessung wird nachfolgend anhand der Figuren 12, 13a, 13b, 14 und 15 beschrieben. Die Figuren 12, 13a und 13b zeigen analog zum vorherigen Ausführungsbeispiel wiederum schematisierte Darstellungen des Strahlengangs dieses Ausführungsbeispiels in unterschiedlichen Ansichten, Figur 14 eine Draufsicht auf die Trägerelemente mit den darauf angeordneten Umlenkelementen und den darauf einfallenden Mess- bzw. Referenzstrahlenbündeln M, R und Figur 15 eine Draufsicht auf den Messreflektor mit den Auftrefforten des Messstrahlenbündels auf dem Messreflektor.

Wie im vorhergehenden Ausführungsbeispiel wird auch im vorliegenden dritten Ausführungsbeispiel bezüglich des Strahlengangs des Messstrahlenbündels M und des Referenzstrahlenbündels R nachfolgend angegeben, in welcher Reihenfolge die verschiedenen Elemente der erfindungsgemäßen Vorrichtung vom Messstrahlenbündel M sowie vom Referenzstrahlenbündel R zwischen dem Aufspaltgitter 211 und dem Vereinigungsgitter 215 beaufschlagt werden. Zusätzlich sei in diesem Zusammenhang auf die Figuren 12, 13a, 13b, 14 und 15 verwiesen.

Strahlengang Messstrahlenbündel M:

Aufspaltgitter 211 → Messreflektor 200, Auftreffort A1 → Umlenkelement 213.1 → Messreflektor 200, Auftreffort A2 → Umlenkelement 223 → Umlenkelement 224 → Messreflektor 200, Auftreffort A3 → Umlenkelement 214.1 → Messreflektor 200, Auftreffort A4 → Vereinigungsgitter 215

Strahlengang Referenzstrahlenbündel R:

Aufspaltgitter 211 → Umlenkelement 213.2 → Umlenkelement 222 → Umlenkelement 225 → Umlenkelement 214.2 → Vereinigungsgitter 215

Das dritte Ausführungsbeispiel unterscheidet sich von den vorherigen beiden Ausführungsbeispielen i.w. durch die nunmehr vorgesehenen Umlenkelemente 213.1, 213.2, 214.1, 214.2, 222, 223, 224, 225.

Hierbei sind die Umlenkelemente 213.1, 213.2, 214.1, 214.2 als lineare Reflexionsphasengitter mit schräggestellten Teilungsstrichen ausgebildet. Die darauf einfallenden Strahlenbündel (Messstrahlenbündel M, Referenzstrahlenbündel R) erfahren über diese Umlenkelemente 213.1, 213.2, 214.1, 214.2 eine Umlenkwirkung senkrecht zur Messrichtung z in der xy-Ebene als auch eine Umlenkwirkung entlang der Messrichtung z in der xz-Ebene, wie dies etwa aus den Ansichten in den Figur 12 und 13a ersichtlich ist. Beispielsweise wird das Messstrahlenbündel M, das vom Auftreffort A1 her kommend auf das Umlenkelement 213.1 trifft nach schräg unten in Richtung des Auftreffpunkts A2 auf dem Messreflektor 200 umgelenkt. Eine Fokussierung bzw. Kollimation der darauf einfallenden Strahlenbündel resultiert über die Umlenkelemente 213.1, 213.2, 214.1, 214.2 nicht.

Die desweiteren vorgesehenen Umlenkelemente 222, 223, 224, 225 sind in diesem Ausführungsbeispiel als reflektive off-axis Fresnel-Zylinderlinsen ausgebildet. Über sie erfahren die darauf einfallenden Strahlenbündel eine Umlenkung entlang der Messrichtung z sowie in der y-Richtung. Über das Umlenkelement 222 etwa wird das vom Umlenkelement 213.2 her einfallende Referenzstrahlenbündel R in Richtung des gegenüberliegenden Umlenkelements 225 umgelenkt.

Zum anderen resultiert über die Umlenkelemente 222, 223, 224, 225 eine fokussierende bzw. kollimierende Wirkung, wenn darauf ein kollimiertes bzw. divergentes Strahlenbündel einfällt. So wird z.B. das kollimiert auf das Umlenkelement 222 einfallende Referenzstrahlenbündel R linienförmig in die Mitte zwischen den Trägerelementen 212A, 212B fokussiert; der Linienfokus L erstreckt sich wie aus Figur 13b ersichtlich wiederum entlang der Messrichtung z. Das anschließend divergent auf das Umlenkelement 225 einfallende Referenzstrahlenbündel R wird von diesem kollimiert und in der y-Richtung und in der z-Richtung in Richtung auf das Umlenkelement 214.2 umgelenkt.

Wie im zweiten Ausführungsbeispiel beaufschlagt das Messstrahlenbündel M aufgrund des vorgesehenen Strahlengangs zwischen dem Aufspaltgitter 211 und dem Vereinigungsgitter 215 wiederum viermal den Messreflektor 200. Im Vergleich zum ersten Ausführungsbeispiel resultiert deshalb wieder eine halbierte Signalperiode der Abstandssignale.

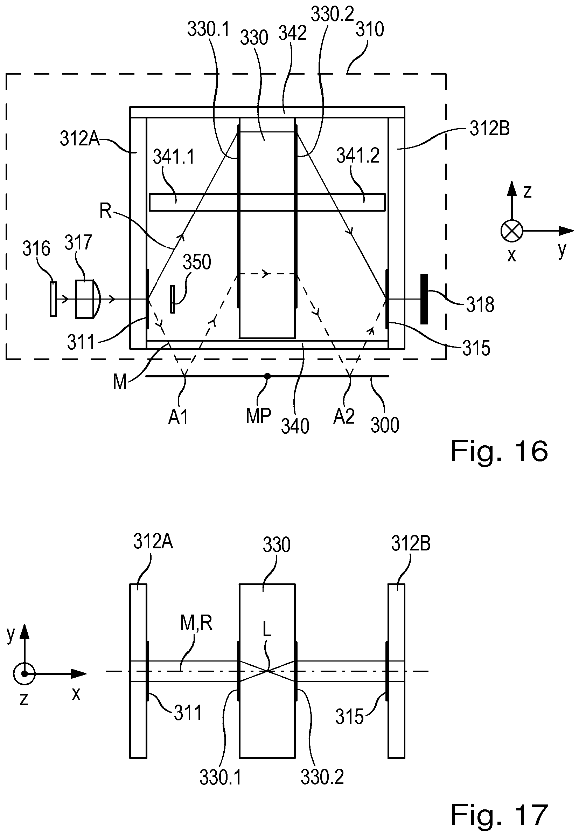

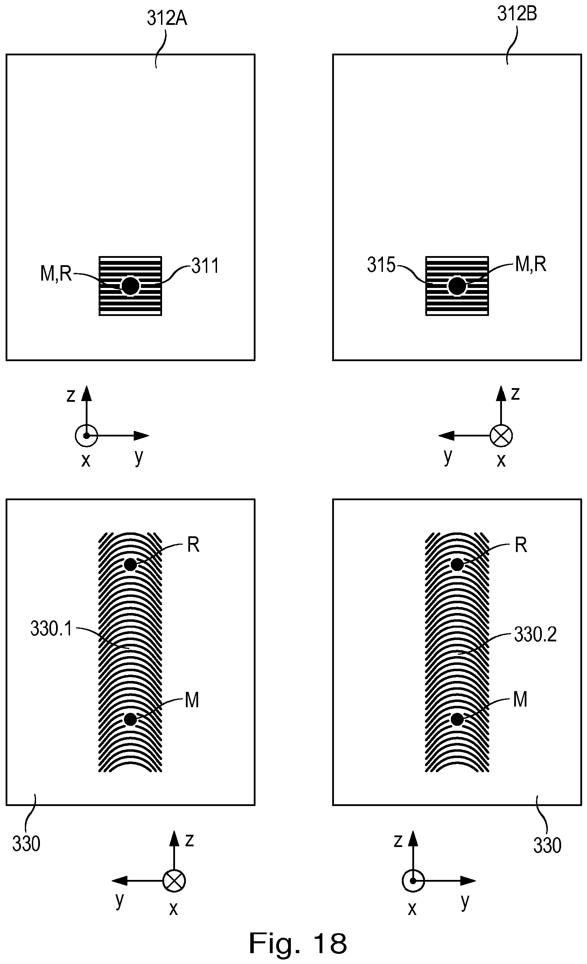

Ein viertes Ausführungsbeispiel der erfindungsgemäßen Vorrichtung zur interferentiellen Abstandsmessung sei abschließend anhand der Figuren 16, 17 und 18 erläutert. Die Figuren 16 und 17 zeigen jeweils wieder schematisierte Darstellungen des Strahlengangs dieses Ausführungsbeispiels in unterschiedlichen Ansichten; Figur 18 zeigt verschiedene Draufsichten auf mehrere Elemente dieses Ausführungsbeispiels.

Als wichtigster Unterschied zu den vorher erläuterten Ausführungsbeispielen ist ein in der der Abtasteinheit 310 mittig angeordnetes, drittes plattenförmiges Trägerelement 330 zu erwähnen, an dem nunmehr die beiden Umlenkelemente 330.1, 330.2 angeordnet sind. Die Umlenkelemente 330.1, 330.2 sind im Gegensatz zu den bisherigen Ausführungsbeispielen als diffraktive Strukturen in Form von Transmissionsgittern ausgebildet, die bestimmte optische Wirkungen auf die darauf einfallenden Strahlenbündel ausüben. Als drittes Trägerelement 330 ist vorzugsweise eine transparente Glasplatte vorgesehen, wobei auf der dem ersten Trägerelement 312A zugewandten Seite das erste Umlenkelement 330.1 angeordnet ist und auf der dem zweiten Trägerelement 312B zugewandten Seite das zweite Umlenkelement 330.2.

Die Abtasteinheit 310 wird in Richtung des Messreflektors 300 hin durch eine transparente Glasplatte 340 abgeschlossen, an der entgegengesetzten Seite der Abtasteinheit 310 ist eine weitere Glasplatte 342 angeordnet. Zwischen dem mittigen, dritten Trägerelement 330 und den beiden äußeren Trägerelementen 312A, 312B sind wie aus Figur 16 ersichtlich noch Ausgleichselemente 341.1, 341.2 angeordnet, die ebenfalls als Glasplatten mit bestimmten Dicken ausgebildet sind und sich jeweils zwischen dem mittigen dritten Trägerelement 330 und den benachbarten Trägerelementen 312A, 312B erstrecken; zu deren Funktion sei auf die nachfolgende Beschreibung des Abtaststrahlengangs dieses Ausführungsbeispiels verwiesen.

Das von der Lichtquelle 316 emittierte Strahlenbündel wird analog zu den anderen Ausführungsbeispielen von einer Kollimationsoptik 317 kollimiert und trifft dann auf das Aufspaltelement auf, das wiederum als Aufspaltgitter 311 in Form eines Transmissions-Phasengitters ausgebildet und wie in den anderen Ausführungsbeispielen an einem ersten Trägerelement 312A angeordnet ist.

Über das Aufspaltgitter 311 erfolgt die Aufspaltung des von der Lichtquelle 316 her einfallenden, kollimierten Strahlenbündels in ein Messstrahlenbündel M und ein Referenzstrahlenbündel R, wozu wiederum eine Aufspaltung in +1. und -1. Beugungsordnungen erfolgt; die -1. Beugungsordnung fungiert nachfolgend als Messstrahlenbündel M, die +1. Beugungsordnung als Referenzstrahlenbündel R. Im dargestellten Ausführungsbeispiel wird vom Aufspaltgitter 311 die 0. Beugungsordnung möglichst vollständig unterdrückt; um sicherzustellen, dass eine ggf. doch vorhandene 0. Beugungsordnung nicht unnötig den Interferenzkontrast und damit die Signalgüte der Abtastsignale verschlechtert, ist in der Abtasteinheit 310 eine Blende 350 benachbart zum Aufspaltgitter 311 platziert.

Das Messstrahlenbündel M propagiert vom Aufspaltgitter 311 dann in Richtung des Messreflektors 300 und erfährt dort am ersten Auftreffort A1 eine erste Reflexion in Richtung des ersten Umlenkelements 330.1 in der Abtasteinheit 310. Das am mittigen Trägerelement 330 angeordnete erste Umlenkelement 330.1 ist wie oben angedeutet als transmittive Fresnel-Zylinderlinse ausgebildet und übt bestimmte optische Wirkungen auf das darauf einfallende Messstrahlenbündel M aus.

So erfährt das auf das erste Umlenkelement 330.1 einfallende Messstrahlenbündel M hierbei eine Umlenkwirkung entlang der Messrichtung z. Dies bedeutet, dass in der xz-Ebene das von schräg links unten auf das erste Umlenkelement 330.1 einfallende Messstrahlenbündel M wieder parallel zum auf das Aufspaltgitter 311 einfallenden Beleuchtungsstrahlenbündel ausgerichtet wird. Das vom ersten Umlenkelement 330.1 umgelenkte bzw. transmittierte Messstrahlenbündel M propagiert somit parallel zur Oberfläche des Messreflektors 300 in Lichteinfallsrichtung x in Richtung des zweiten Umlenkelements 330.2 an der gegenüberliegenden Seite des mittigen Trägerelements 330.

Neben der Umlenkwirkung entlang der Messrichtung z übt das erste Umlenkelement 330.1 auch in diesem Ausführungsbeispiel auf das darauf einfallende kollimierte Messstrahlenbündel M eine weitere optische Wirkung aus. So erfährt das kollimierte Messstrahlenbündel M über das erste Umlenkelement 330.1 ferner eine fokussierende Wirkung auf einen Linienfokus L hin, d.h. das kollimierte Messstrahlenbündel M wird über das erste Umlenkelement 330.1 linienförmig fokussiert. Der resultierende Linienfokus L erstreckt sich hierbei - wie aus Figur 17 ersichtlich - entlang der Messrichtung z und liegt genau in der Mitte zwischen den beiden äußeren Trägerelementen 312A, 312B.

Wie aus Figur 16 ersichtlich, propagiert das Messstrahlenbündel M parallel zur Lichteinfallsrichtung x dann zu einem zweiten Umlenkelement 330.2, das an der gegenüberliegenden Seite des dritten Trägerelement 330 angeordnet ist. Das zweite Umlenkelement 330.2 ist im vorliegenden Ausführungsbeispiel ebenfalls als transmittive Fresnel-Zylinderlinse mit zusätzlicher Umlenkfunktion in z-Richtung ausgebildet, identisch zur Fresnel-Zylinderlinse des ersten Umlenkelements 330.1.

Über das zweite Umlenkelement 330.2 wird zum einen wieder eine Umlenkwirkung auf das darauf einfallende Messstrahlenbündel M entlang der Messrichtung z in der xz-Ebene ausgeübt. Das von links auf das zweite Umlenkelement 330.2 einfallende Messstrahlenbündel M wird dabei vom zweiten Umlenkelement 330.2 nach rechts unten in Richtung des Messreflektors 300 umgelenkt; dort trifft es an einem zweiten Auftreffort A2 erneut auf den Messreflektor 300. Der erste und zweite Auftreffort A1, A2 des Messstrahlenbündels M auf dem Messreflektor 300 liegen in der Lichteinfallsrichtung x voneinander beabstandet.

Neben einer derartigen Umlenkwirkung resultiert auch über das zweite Umlenkelement 330.2 wiederum eine weitere optische Wirkung auf das darauf einfallende Messstrahlenbündel M. Wie aus Figur 17 ersichtlich propagiert ab dem Linienfokus L ein divergierendes Messstrahlenbündel M in Richtung des zweiten Umlenkelements 330.2. Das zweite Umlenkelement 330.2 übt auf das einfallende divergierende Messstrahlenbündel M neben der erwähnten Umlenkwirkung ferner eine kollimierende Wirkung aus, d.h. in Richtung des zweiten Auftrefforts A2 auf dem Messreflektor 300 propagiert wieder ein kollimiertes Messstrahlenbündel. M.

Am zweiten Auftreffort A2 am Messreflektor 300 erfährt das Messstrahlenbündel M eine zweite Reflexion und propagiert schließlich in Richtung des Vereinigungselements, ausgebildet als Vereinigungsgitter 315, in der Abtasteinheit 310. Das Vereinigungsgitter 315 ist wie in den vorherigen Ausführungsbeispielen am zweiten Trägerelement 312B angeordnet.

Die beiden senkrecht zum Messreflektor 300 orientierten Trägerelemente 312A, 312B sind analog zu den vorhergehenden Ausführungsbeispielen als Glasplatten ausgebildet, ebenso das hier vorgesehene, zusätzliche dritte Trägerelement 330. Aufgrund der Orientierung der Trägerelemente 312A, 312B und 330 sind damit alle darauf angeordneten Elemente, d.h. die verschiedenen Umlenkelemente 330.1, 330.2 sowie die Aufspalt- und Vereinigungsgitter 311, 315, ebenfalls senkrecht zur Oberfläche des Messreflektors 300 angeordnet.

Das am Aufspaltgitter 311 als +1. Beugungsordnung resultierende Referenzstrahlenbündel R propagiert zunächst in Richtung des ersten Umlenkelements 330.1, das am mittigen Trägerelement 330 angeordnet ist. Das erste Umlenkelement 330.1 übt aufgrund der identischen Einfallswinkel von Messstrahlenbündel M und Referenzstrahlenbündels R die identischen optischen Wirkungen auf das einfallende Referenzstrahlenbündel R aus wie oben erläutert auf das darauf einfallende Messstrahlenbündel M. Neben der Umlenkwirkung entlang der Messrichtung z resultiert demzufolge darüber die oben erwähnte fokussierende Wirkung auf einen Linienfokus L in der Mitte des dritten Trägerelements 330.

Vom ersten Umlenkelement 330.1 propagiert das derart beeinflusste Referenzstrahlenbündel R sodann zum zweiten Umlenkelement 330.2, das an der gegenüberliegenden Seite des dritten Trägerelements 330 angeordnet ist. Auf das darauf parallel zur Lichteinfallsrichtung x einfallende Referenzstrahlenbündel R resultiert demzufolge wieder eine Umlenkwirkung nach rechts unten in Richtung des Vereinigungsgitters 315. Ferner wird das divergent auf das zweite Umlenkelement 330.2 einfallende Referenzstrahlenbündel R von diesem kollimiert, d.h. in Richtung des Vereinigungsgitters 315 propagiert das kollimierte Referenzstrahlenbündel R.

Wie in den vorher erläuterten Ausführungsbeispielen propagiert auch in diesem Ausführungsbeispiel das Referenzstrahlenbündel R zwischen dem Aufspaltgitter 311 und dem Vereinigungsgitter 315 ausschließlich in der Abtasteinheit 310.

Am Vereinigungsgitter 315 treffen das Referenz- und Messstrahlenbündel R, M unter entgegengesetzt symmetrischen Einfallswinkeln auf und kommen dort zur interferierenden Überlagerung.

Über die dem Vereinigungsgitter 315 nachgeordnete Detektoranordnung 318 kann im Fall von Abstandsänderungen zwischen dem Messreflektor 300 und der Abtasteinheit 310 entlang der Messrichtung z ein periodisches Abstandssignal erfasst werden, das zur Weiterverarbeitung zur Verfügung steht. Um hierbei auch Informationen bzgl. der Richtung einer Abstandsänderung verfügbar zu haben, ist die Erzeugung mehrerer phasenverschobener Abstandssignale vorteilhaft. So können wie bereits oben erwähnt beispielsweise drei um jeweils 120° phasenverschobene Abstandssignale oder aber vier um jeweils 90° zueinander phasenverschobene Abstandssignale erzeugt werden; hierzu sei auch auf unsere obigen Ausführungen verwiesen.

Wie aus Figur 16 ersichtlich, durchläuft das Messstrahlenbündel M zwischen dem Aufspaltgitter 311 und dem Vereinigungsgitter 315 viermal die Glasplatte 340, die die Abtasteinheit 310 in Richtung des Messreflektors 300 abschließt. Um den dabei resultierenden, geänderten optischen Weg des Messstrahlenbündels M zu kompensieren, sind im Strahlengang des Referenzstrahlenbündels R in der Abtasteinheit ebenfalls zwei Ausgleichselemente 341.1, 341.2 in Form von Glasplatten angeordnet. Da das Referenzstrahlenbündel R das Ausgleichselement 341.1 genau einmal und das Ausgleichselement 341.2 ebenfalls genau einmal durchläuft, weisen die Ausgleichselemente 341.1, 341.2 jeweils die doppelte Dicke der Glasplatte 340 auf. Auf diese Art und Weise durchlaufen das Mess- und das Referenzstrahlenbündel M, R identische Glaswege in der Abtasteinheit 310; Phasenunterschiede in den Strahlenbündeln M, R resultieren ausschließlich aufgrund von Abstandsänderungen zwischen dem Messreflektor 300 und der Abtasteinheit 310, da sich hierbei das Messstrahlenbündel M relativ zu den Umlenkelementen 330.1, 330.2 verschiebt.

Alternativ zur erläuterten Ausführungsform wäre es in einer abgewandelten Variante auch möglich, die ersten und zweiten Umlenkelemente 330.1, 330.2 jeweils zweiteilig auszubilden, d.h. nicht als sich in z-Richtung erstreckendes einzelnes Transmissionsgitter sondern in Form je zweier Transmissionsgitter, die nur lokal im Bereich der Auftreffpunkte der Mess- und Referenzstrahlenbündel M, R vorgesehen sind.

Ebenso ist es denkbar, die Umlenkelemente 330.1, 330.2 getrennt auf zwei dünnen Glasplatten anzuordnen, die links und rechts von der Symmetriemitte der Anordnung senkrecht zum Messreflektor 300 orientiert platziert sind. Der Abstand dieser beiden Glasplatten wäre dann so zu wählen, dass die optischen Wege der Strahlenbündel zwischen dem ersten und zweiten Umlenkelement 330.1, 330.2 identisch wären zum Fall der oben beschriebenen Ausführungsform mit der dicken Glasplatte 330.

Als Vorteil der vierten Ausführungsform der erfindungsgemäßen Vorrichtung wäre zu erwähnen, dass eine in z-Richtung deutlich kompaktere Abtasteinheit im Vergleich zu den vorherigen Varianten resultiert. Hinzu kommt eine größere Unempfindlichkeit gegenüber eventuellen Verkippungen des Messreflektors 300, da bei eventuellen Verkippungen des Messreflektors 300 die relativen Verschiebungen von Mess- und Referenzstrahlenbündel am Ort der Interferenz geringer sind.

Neben den konkret erläuterten Ausführungsbeispielen gibt es selbstverständlich noch weitere Möglichkeiten, die erfindungsgemäße Vorrichtung zur interferentiellen Abstandsmessung alternativ auszugestalten.

In allen beschriebenen Ausführungsbeispielen sind aus Symmetriegründen im Strahlengang des Referenzstrahlenbündels die gleichen abbildenden optischen Elemente bzw. optischen Funktionalitäten in den Umlenkelementen vorgesehen wie beim Messstrahlenbündel. Da eine Kippung des Messreflektors keinen Einfluss auf das Referenzstrahlenbündel hat, könnten in weiteren möglichen Ausführungsformen die Umlenkelemente im Strahlengang des Referenzstrahlenbündels auch als rein umlenkende Elemente ohne zusätzliche optische Funktionalität ausgebildet werden.

Desweiteren muss das Vereinigungselement nicht wie in den verschiedenen Ausführungsbeispielen gezeigt als Vereinigungsgitter ausgebildet werden. Es wäre im Rahmen der vorliegenden Erfindung auch grundsätzlich denkbar,

14

als Vereinigungselement z.B. einen geeigneten Strahlteiler an dieser Stelle vorzusehen.

Schließlich sind als äquivalent zu den erläuterten Lösungen Strahlengänge realisierbar, bei welchen die Lichtquelle und die Gitter sich virtuell an den gleichen Stellen befinden wie in den hier beschriebenen Ausführungsbeispielen. Dies könnte z.B. durch zusätzliche spiegelnde Elemente im Strahlengang erreicht werden etc..

## Patentansprüche

**1.** Vorrichtung zur interferentiellen Abstandsmessung mit

- einem Messreflektor (1; 100; 200),
- einer Lichtquelle (16; 116; 216),
- einem Aufspaltelement, welches ein von der Lichtquelle (16; 116; 216) emittiertes Strahlenbündel in mindestens ein Messstrahlenbündel (M) und mindestens ein Referenzstrahlenbündel (R) aufspaltet, wobei das Messstrahlenbündel (M) im weiteren Strahlverlauf mindestens zweimal den Messreflektor (1; 100; 200) beaufschlagt,
- einem Vereinigungselement, an dem das Messstrahlenbündel (M) und das Referenzstrahlenbündel (R) zur interferierenden Überlagerung gelangen sowie mit
- einer Detektoranordnung (18; 118; 218), über die mindestens ein Abstandssignal aus den interferierenden Mess- und Referenzstrahlenbündeln (M, R) bezüglich des Abstands zwischen dem Messreflektor (1; 100; 200) und ein oder mehreren anderen Komponenten der Vorrichtung entlang einer Messrichtung (z) erzeugbar ist, wobei der Messreflektor (1; 100; 200) gegenüber zumindest einem Teil der Komponenten abstandsvariabel angeordnet ist,

**dadurch gekennzeichnet,**
- **dass** das Aufspaltelement als Aufspaltgitter (11; 111; 211) ausgebildet ist und die Lichtquelle (16; 116; 216) das Strahlenbündel parallel zur Oberfläche des Messreflektors (1; 100; 200) in Richtung des Aufspaltgitters (11; 111; 211) emittiert, wobei das Aufspaltgitter (11; 111; 211) senkrecht zur Oberfläche des Messreflektors (1; 100; 200) angeordnet ist und
- **dass** die Strahlengänge des Mess- und Referenzstrahlenbündels (M, R) zwischen dem Aufspaltgitter (11; 111; 211) und dem Vereinigungselement jeweils spiegelsymmetrisch zu einer Symmetrieebene (S) verlaufen, die senkrecht zur Oberfläche des Messreflektors (1; 100; 200) orientiert ist, und
- **dass** im Strahlengang des Referenzstrahlenbündels (R) und des Messstrahlenbündels (M) zwischen dem Aufspaltgitter (11; 111; 211) und dem Vereinigungselement jeweils mindestens zwei Umlenkelemente (13.1, 13.2, 14.1, 14.2; 113.1a, 113.1b, 113.2a, 113.2b, 114.1a, 114.1b, 114.2a, 114.2b; 213.1, 213.2, 214.1, 214.2) angeordnet sind, wobei über jedes Umlenkelement (13.1, 13.2, 14.1, 14.2; 113.1a, 113.1b, 113.2a, 113.2b, 114.1a, 114.1b, 114.2a, 114.2b; 213.1, 213.2, 214.1, 214.2) auf das einfallende Strahlenbündel entweder eine Umlenkwirkung entlang der Messrichtung (z) oder entlang und senkrecht zur Messrichtung (z) resultiert.

**2.** Vorrichtung nach Anspruch 1, **dadurch gekennzeichnet, dass** die Lichtquelle (16; 116; 216), das Aufspaltgitter (11; 111; 211), das Vereinigungselement und die Detektoranordnung (18; 118; 218) zusammen mit weiteren Komponenten in einer Abtasteinheit (10; 110; 210) angeordnet sind, welche gegenüber dem Messreflektor (1; 100; 200) mindestens entlang der Messrichtung (z) abstandsvariabel angeordnet ist.

**3.** Vorrichtung nach Anspruch 1 oder 2, **dadurch gekennzeichnet, dass** das Aufspaltgitter (11; 111; 211) auf einem plattenförmigen Trägerelement (12A, 12B; 112A, 112B; 212A, 212B) angeordnet ist und das Trägerelement (12A, 12B; 112A, 112B; 212A, 212B) senkrecht zur Oberfläche des Messreflektors (1; 100; 200) orientiert angeordnet ist.

**4.** Vorrichtung nach Anspruch 1, **dadurch gekennzeichnet, dass** über die Umlenkelemente(13.1, 13.2, 14.1, 14.2; 113.1a, 113.1b, 113.2a, 113.2b, 114.1a, 114.1b, 114.2a, 114.2b; 213.1, 213.2, 214.1, 214.2)

- ein darauf einfallendes kollimiertes Strahlenbündel ferner eine fokussierende Wirkung auf einen Linienfokus (L) erfährt, wobei der Linienfokus (L) sich entlang der Messrichtung (z) erstreckt und
- auf ein darauf einfallendes divergierendes Strahlenbündel ferner eine kollimierende Wirkung resultiert.

**5.** Vorrichtung nach Anspruch 1, **dadurch gekennzeichnet, dass** die Umlenkelemente diffraktive Strukturen umfassen, die auf Trägerelementen (12A, 12B; 112A, 112B; 212A, 212B) angeordnet sind, welche senkrecht zum Messreflektor (1; 100; 200) angeordnet sind.

**6.** Vorrichtung nach Anspruch 4, **dadurch gekennzeichnet, dass** die Umlenkelemente (13.1, 13.2, 14.1, 14.2) als reflektive Fresnel-Zylinderlinsen ausgebildet sind, wobei über die reflektiven Fresnel-Zylinderlinsen auf das einfallende Strahlenbündel neben einer fokussierenden Wirkung zusätzlich eine Umlenkwirkung entlang der Messrichtung (z) resultiert.

**7.** Vorrichtung nach Anspruch 6, **dadurch gekennzeichnet, dass** über zwei der Umlenkelemente (13.1, 13.2, 14.1, 14.2) auf die einfallenden Strahlenbündel eine fokussierende Wirkung auf einen Linienfokus (L) resultiert.

**8.** Vorrichtung nach Anspruch 4, **dadurch gekennzeichnet, dass** die Umlenkelemente (113.1a, 113.1b, 113.2a, 113.2b, 114.1a, 114.1b, 114.2a, 114.2b) als transmittive Fresnel-Zylinderlinsen ausgebildet sind, die jeweils zusammen mit einem Reflektor (120, 121) an zwei Trägerelementen (112A, 112B) angeordnet sind, wobei

- die transmittiven Fresnel-Zylinderlinsen auf den einander zugewandten Seiten der Trägerelemente (112A, 112B) angeordnet sind und
- die Reflektoren (120, 121) auf den jeweils gegenüberliegenden Seiten der Trägerelemente (112A, 112B) angeordnet sind und deren reflektierende Seite in Richtung der transmittiven Fresnel-Zylinderlinsen orientiert ist, und
- die transmittiven Fresnel-Zylinderlinsen derart ausgebildet sind, dass ein darauf einfallendes kollimiertes Strahlenbündel eine linienförmige Fokussierung auf die reflektierende Seite der Reflektoren (120, 121) erfährt.

**9.** Vorrichtung nach Anspruch 4, **dadurch gekennzeichnet, dass** die Umlenkelemente (213.1, 213.2, 214.1, 214.2) als reflektive Off-Axis-Fresnel-Zylinderlinsen ausgebildet sind, die auf den einander zugewandten Seiten zweier Trägerelemente (212A, 212B) angeordnet sind.

**10.** Vorrichtung nach Anspruch 2, **dadurch gekennzeichnet, dass** das Referenzstrahlenbündel (R) zwischen dem Aufspaltgitter (11; 111; 211) und dem Vereinigungselement ausschließlich in der Abtasteinheit (10; 110; 210) propagiert.

**11.** Vorrichtung nach Anspruch 1, **dadurch gekennzeichnet, dass** die Umlenkelemente (330.1, 330.2) als transmittive Fresnel-Zylinderlinsen ausgebildet sind, die auf gegenüberliegenden Seiten eines plattenförmigen Trägerelement (330) angeordnet sind, das zwischen zwei äußeren plattenförmigen Trägerelementen (312A, 312B) platziert ist und an denen das Aufspaltgitter (311) und ein Vereinigungselement angeordnet sind.

**12.** Vorrichtung nach Anspruch 11, **dadurch gekennzeichnet, dass** die Komponenten in der Abtasteinheit (310) derart angeordnet und ausgebildet sind, dass

- das Messstrahlenbündel (M) vom Aufspaltgitter (311) in Richtung des Messreflektors (300) propagiert und dort an einem ersten Auftreffort (A1) eine erste Reflexion in Richtung des ersten Umlenkelements (330.1) in der Abtasteinheit (310) erfährt und
- das Messstrahlenbündel (M) dann am ersten Umlenkelement (330.1) eine Umlenkung in Richtung eines zweiten Umlenkelements (330.2) erfährt und
- das Messstrahlenbündel (M) dann am zweiten Umlenkelement (330.2) eine Umlenkung in Richtung des Messreflektors (300) erfährt und dort an einem zweiten Auftreffort (A2) eine zweite Reflexion in Richtung des Vereinigungselements erfährt und
- das Referenzstrahlenbündel (R) vom Aufspaltgitter (311) in Richtung des ersten Umlenkelements (330.1) propagiert und dort eine Umlenkung in Richtung des zweiten Umlenkelements (330.2) erfährt und
- das Referenzstrahlenbündel (R) am zweiten Umlenkelement (330.2) eine Umlenkung in Richtung des Vereinigungselements erfährt.

**13.** Vorrichtung nach mindestens einem der vorhergehenden Ansprüche, **dadurch gekennzeichnet, dass** das Vereinigungselement als Vereinigungsgitter (15; 115; 215) ausgebildet und senkrecht zur Oberfläche des Messreflektors (1; 100; 200) angeordnet ist.

**Claims**

**1.** Apparatus for an interference-based distance measurement, comprising

- a measurement reflector (1; 100; 200),

- a light source (16; 116; 216),
- a splitter element which splits a beam emitted by the light source (16; 116; 216) into at least one measurement beam (M) and at least one reference beam (R), wherein the measurement beam (M) impinges on the measurement reflector (1; 100; 200) at least twice further down the beam path,
- a merging element at which the measurement beam (M) and the reference beam (R) reach a state of interfering superposition, and comprising
- a detector arrangement (18; 118; 218), by means of which at least one distance signal in respect of the distance between the measurement reflector (1; 100; 200) and one or more other components of the apparatus along a measurement direction (z) is generable from the interfering measurement and reference beams (M, R), wherein the measurement reflector (1; 100; 200) is arranged with a variable distance in relation to at least some of the components,

**characterized**

- **in that** the splitter element is embodied as a splitter grating (11; 111; 211) and the light source (16; 116; 216) emits the beam parallel to the surface of the measurement reflector (1; 100; 200) in the direction of the splitter grating (11; 111; 211), wherein the splitter grating (11; 111; 211) is arranged perpendicular to the surface of the measurement reflector (1; 100; 200) and
- **in that**, between the splitter grating (11; 111; 211) and the merging element, the beam paths of the measurement and reference beam (M, R) each extend in mirror-symmetric fashion with respect to a plane of symmetry (S), which is oriented perpendicular to the surface of the measurement reflector (1; 100; 200), and
- **in that**, between the splitter grating (11; 111; 211) and the merging element, at least two deflection elements (13.1, 13.2, 14.1, 14.2; 113.1a, 113.1b, 113.2a, 113.2b, 114.1a, 114.1b, 114.2a, 114.2b; 213.1, 213.2, 214.1, 214.2) are in each case arranged in the beam path of the reference beam (R) and the measurement beam (M), wherein a deflection effect either along the measurement direction (z) or along and perpendicular to the measurement direction (z) results on the incident beam by way of each deflection element (13.1, 13.2, 14.1, 14.2; 113.1a, 113.1b, 113.2a, 113.2b, 114.1a, 114.1b, 114.2a, 114.2b; 213.1, 213.2, 214.1, 214.2).

2. Apparatus according to Claim 1, **characterized in that** the light source (16; 116; 216), the splitter grating (11; 111; 211), the merging element and the detector arrangement (18; 118; 218) are arranged together with further components in a scanning unit (10; 110; 210), which, at least along the measurement direction (z), is arranged with a variable distance in relation to the measurement reflector (1; 100; 200).

3. Apparatus according to Claim 1 or 2, **characterized in that** the splitter element (11; 111; 211) is arranged on a planar carrier element (12A, 12B; 112A, 112B; 212A, 212B) and the carrier element (12A, 12B; 112A, 112B; 212A, 212B) is arranged with a perpendicular orientation relative to the surface of the measurement reflector (1; 100; 200).

4. Apparatus according to Claim 1, **characterized in that**, by way of the deflection elements (13.1, 13.2, 14.1, 14.2; 113.1a, 113.1b, 113.2a, 113.2b, 114.1a, 114.1b, 114.2a, 114.2b; 213.1, 213.2, 214.1, 214.2),

- a collimated beam incident thereon further experiences a focusing effect onto a line focus (L), wherein the line focus (L) extends along the measurement direction (z), and
- a divergent beam incident thereon further results in a collimating effect.

5. Apparatus according to Claim 1, **characterized in that** the deflection elements comprise diffractive structures which are arranged on carrier elements (12A, 12B; 112A, 112B; 212A, 212B) which are arranged perpendicular to the measurement reflector (1; 100; 200).

6. Apparatus according to Claim 4, **characterized in that** the deflection elements (13.1, 13.2, 14.1, 14.2) are embodied as reflective cylindrical Fresnel lenses, wherein, by way of the reflective cylindrical Fresnel lenses, an additional deflection effect along the measurement direction (z) results for the incident beam in addition to a focusing effect.

7. Apparatus according to Claim 6, **characterized in that** a focusing effect on a line focus (L) results by way of two of the deflection elements (13.1, 13.2, 14.1, 14.2).

8. Apparatus according to Claim 4, **characterized in that** the deflection elements (113.1a, 113.1b, 113.2a, 113.2b, 114.1a, 114.1b, 114.2a, 114.2b) are embodied as transmissive cylindrical Fresnel lenses, which are each arranged together with a reflector (120, 121) at two carrier elements (112A, 112B), wherein

- the transmissive cylindrical Fresnel lenses are arranged on the sides of the carrier elements (112A, 112B) facing one another and

- the reflectors (120, 121) are arranged on the sides of the carrier elements (112A, 112B) respectively lying opposite one another and the reflecting side of said reflectors is oriented in the direction of the transmissive cylindrical Fresnel lenses, and

- the transmissive cylindrical Fresnel lenses are embodied in such a way that a collimated beam incident thereon experiences line-shaped focusing on the reflecting side of the reflectors (120, 121).

**9.** Apparatus according to Claim 4, **characterized in that** the deflection elements (213.1, 213.2, 214.1, 214.2) are embodied as reflective off-axis cylindrical Fresnel lenses, which are arranged on the sides of two carrier elements (212A, 212B) facing one another.

**10.** Apparatus according to Claim 2, **characterized in that** the reference beam (R) only propagates in the scanning unit (10; 110; 210) between the splitter grating (11; 111; 211) and the merging element.

**11.** Apparatus according to Claim 1, **characterized in that** the deflection elements (330.1, 330.2) are embodied as transmissive cylindrical Fresnel lenses, which are arranged on opposite sides of a planar carrier element (330), which is placed between two outer planar carrier elements (312A, 312B) and at which the splitter grating (311) and a merging element are arranged.

**12.** Apparatus according to Claim 11, **characterized in that** the components are arranged and embodied in the scanning unit (310) in such a way that

- the measurement beam (M) propagates from the splitter grating (311) in the direction of the measurement reflector (300) and, there, it experiences a first reflection in the direction of the first deflection element (330.1) in the scanning unit (310) at a first point of incidence (A1) and

- the measurement beam (M) then experiences a deflection in the direction of a second deflection element (330.2) at the first deflection element (330.1) and

- the measurement beam (M) then experiences a deflection at the second deflection element (330.2) in the direction of the measurement reflector (300) and, there, it experiences a second reflection in the direction of the merging element at a second point of incidence (A2) and

- the reference beam (R) propagates from the splitter grating (311) in the direction of the first deflection element (330.1) and, there, it experiences a deflection in the direction of the second deflection element (330.2) and

- the reference beam (R) experiences a deflection in the direction of the merging element at the second deflection element (330.2).

**13.** Apparatus according to at least one of the preceding claims, **characterized in that** the merging element is embodied as a merging grating (15; 115; 215) and arranged perpendicular to the surface of the measurement reflector (1; 100; 200).

**Revendications**

**1.** Dispositif de mesure de distance interférentielle comprenant

- un réflecteur de mesure (1 ; 100 ; 200),

- une source de lumière (16 ; 116 ; 216),

- un élément de séparation qui divise un faisceau de rayons émis par la source de lumière (16 ; 116 ; 216) en au moins un faisceau de rayons de mesure (M) et au moins un faisceau de rayons de référence (R), le faisceau de rayons de mesure (M) étant appliqué dans l'autre trajet de faisceau de rayons au moins deux fois au réflecteur de mesure (1 ; 100 ; 200),

- un élément d'union au niveau duquel le faisceau de rayons de mesure (M) et le faisceau de rayons de référence (R) viennent en superposition interférente et

- un ensemble détecteur (18 ; 118 ; 218) permettant de générer au moins un signal de distance à partir des faisceaux de rayons de mesure et de référence interférents (M, R) par rapport à la distance entre le réflecteur de mesure (1 ; 100 ; 200) et un ou plusieurs autres composants du dispositif dans une direction de mesure (z), le réflecteur de mesure (1 ; 100 ; 200) étant disposé à une distance variable d'au moins une partie des composants, **caractérisé en ce que**

- l'élément de séparation est conçu comme un réseau de séparation (11 ; 111 ; 211) et la source de lumière (16 ; 116 ; 216) émet le faisceau de rayons parallèlement à la surface du réflecteur de mesure (1 ; 100 ; 200) en direction du réseau de séparation (11 ; 111 ; 211), le réseau de séparation (11 ; 111 ; 211) étant disposé perpendiculairement à la surface du réflecteur de mesure (1 ; 100 ; 200) et

- les trajets de rayons des faisceaux de rayons de mesure et de référence (M, R) s'étendent chacun entre le réseau de séparation (11 ; 111 ; 211) et l'élément d'union à symétrie spéculaire par rapport à un plan de symétrie (S) qui est orienté perpendiculairement à la surface du réflecteur de mesure (1 ; 100: 200), et

- au moins deux éléments de déviation (13.1, 13.2, 14.1, 14.2 ; 113.1a, 113.1b, 113.2a, 113.2b, 114.1a, 114.1b, 114.2a, 114.2b ; 213.1, 213.2, 214.1, 214.2) sont disposés dans le trajet de rayons du faisceau de rayons de référence (R) et du faisceau de rayons de mesure (M) entre le réseau de séparation (11 ; 111 ; 211) et l'élément d'union, chaque élément de déviation (13.1, 13.2, 14.1, 14.2 ; 113.1a, 113.1b, 113.2a, 113.2b, 114.1a, 114.1b, 114.2a, 114.2b ; 213.1, 213.2, 214.1, 214.2) entraînant un effet de déviation sur le faisceau de rayons incident soit dans la direction de mesure (z) soit dans la direction de mesure (z) et perpendiculairement à celle-ci.

2. Dispositif selon la revendication 1, **caractérisé en ce que** la source de lumière (16 ; 116 ; 216), le réseau de séparation (11 ; 111 ; 211), l'élément d'union et l'ensemble détecteur (18 ; 118 ; 218) sont disposés conjointement avec d'autres composants dans une unité de balayage (10 ; 110 ; 210) qui est disposée à une distance variable par rapport au réflecteur de mesure (1 ; 100 ; 200) au moins dans la direction de mesure (z).

3. Dispositif selon la revendication 1 ou 2, **caractérisé en ce que** le réseau de séparation (11 ; 111 ; 211) est disposé sur un élément de support (12A, 12B ; 112A, 112B ; 212A, 212B) en forme de plaque et l'élément de support (12A, 12B ; 112A, 112B ; 212A, 212B) est disposé en étant orienté perpendiculairement à la surface du réflecteur de mesure (1 ; 100 ; 200).

4. Dispositif selon la revendication 1, **caractérisé en ce que** par le biais des éléments de déviation (13.1, 13.2, 14.1, 14.2 ; 113.1a, 113.1b, 113.2a, 113.2b, 114.1a, 114.1b, 114.2a, 114.2b ; 213.1, 213.2, 214.1, 214.2)

   - un faisceau de rayons collimaté incident à celui-ci subit également un effet de focalisation sur un foyer linéaire (L), le foyer linéaire (L) s'étendant dans la direction de mesure (z) et
   - un effet de collimation résulte également sur un faisceau divergent de rayons incident sur celui-ci.

5. Dispositif selon la revendication 1, **caractérisé en ce que** les éléments de déviation comprennent des structures diffractives qui sont disposées sur des éléments de support (12A, 12B ; 112A ; 112B, 212A, 212B) qui sont disposés perpendiculairement au réflecteur de mesure (1 ; 100 ; 200).

6. Dispositif selon la revendication 4, **caractérisé en ce que** les éléments de déviation (13.1, 13.2, 14.1, 14.2) sont réalisés sous la forme de lentilles de Fresnel cylindriques réflexives, avec pour résultat un effet de déviation dans la direction de mesure (z), par le biais des lentilles de Fresnel cylindriques réflexives, sur le faisceau de rayons incident en plus d'un effet de focalisation.

7. Dispositif selon la revendication 6, **caractérisé en ce que** deux des éléments de déviation (13.1, 13.2, 14.1, 14.2) confèrent au faisceau de rayons incident un effet de focalisation sur un foyer linéaire (L).

8. Dispositif selon la revendication 4, **caractérisé en ce que** les éléments de déviation (113.1a, 113.1b, 113.2a, 113.2b, 114.1a, 114.1b, 114.2a, 114.2b) sont réalisés sous la forme de lentilles de Fresnel cylindriques transmissives qui sont disposées chacune conjointement avec un réflecteur (120, 121) sur deux éléments de support (112A, 112B),

   - les lentilles de Fresnel cylindriques transmissives étant disposées sur les côtés des éléments de support (112A, 112B) qui sont dirigés les uns vers les autres et
   - les réflecteurs (120, 121) étant disposés sur les côtés respectivement opposés des éléments de support (112A, 112B) et leur côté réfléchissant étant orienté en direction des lentilles de Fresnel cylindriques transmissives, et
   - les lentilles de Fresnel cylindriques transmissives étant conçues de telle sorte qu'un faisceau de rayons collimaté incident sur celles-ci subisse une focalisation linéaire sur le côté réfléchissant des réflecteurs (120, 121).

9. Dispositif selon la revendication 4, **caractérisé en ce que** les éléments de déviation (213.1, 213.2, 214.1, 214.2) sont réalisés sous la forme de lentilles de Fresnel cylindriques désaxées réflexives disposées sur les côtés de deux éléments de support (212A, 212B) qui sont dirigés les uns vers les autres.

**10.** Dispositif selon la revendication 2, **caractérisé en ce que** le faisceau de rayons de référence (R) se propage entre le réseau de séparation (11 ; 111 ; 211) et l'élément d'union exclusivement dans l'unité de balayage (10 ; 110 ; 210).

**11.** Dispositif selon la revendication 1, **caractérisé en ce que** les éléments de déviation (330.1, 330.2) sont réalisés sous la forme de lentilles de Fresnel cylindriques transmissives qui sont disposées sur les côtés opposés d'un élément de support (330) en forme de plaque qui est placé entre deux éléments de support extérieurs (312A, 312B) en forme de plaque et sur lequel le réseau de séparation (311) et un élément d'union sont disposés.

**12.** Dispositif selon la revendication 11, **caractérisé en ce que** les composants sont disposés dans l'unité de balayage (310) et conçus de telle sorte que

- le faisceau de rayons de mesure (M) se propage depuis le réseau de séparation (311) en direction du réflecteur de mesure (300) et y subisse en un premier point d'incidence (A1) une première réflexion en direction du premier élément de déviation (330.1) dans l'unité de balayage (310) et
- le faisceau de rayons de mesure (M) subisse alors au niveau du premier élément de déviation (330.1) une déviation en direction d'un deuxième élément de déviation (330.2) et
- le faisceau de rayons de mesure (M) subisse alors au niveau du deuxième élément de déviation (330.2) une déviation en direction du réflecteur de mesure (300) et y subisse en un deuxième point d'incidence (A2) une deuxième réflexion en direction de l'élément d'union et
- le faisceau de rayons de référence (R) se propage depuis le réseau de division (311) en direction du premier élément déflecteur (330.1) et y subisse une déviation en direction du deuxième élément déflecteur (330.2) et
- le faisceau de rayons de référence (R) subisse au niveau du deuxième élément de déviation (330.2) une déviation en direction de l'élément d'union.

**13.** Dispositif selon l'une au moins des revendications précédentes, **caractérisé en ce que** l'élément d'union est réalisé sous la forme d'un réseau d'union (15 ; 115 ; 215) et est disposé perpendiculairement à la surface du réflecteur de mesure (1 ; 100 ; 200).

Fig. 1   Stand der Technik

Fig. 2

Fig. 3

Fig. 4

12A

R ⌇ 14.2

M ⌇ 14.1

M,R ⌇ 11

12B

R ⌇ 13.2

M ⌇ 13.1

M,R ⌇ 15

Fig. 5

10'

12A'  R  20  12B'

14.2' ⌇ 13.2'

14.1' ⌇ 13.1'

M

16'  17'  19

18'

11'  A1'  A2'  21  15'  1'

MP'

Fig. 7

Fig. 6

Fig. 8

Fig. 9a

Fig. 9b

Fig. 10

Fig. 11

Fig. 12

Fig. 13a

Fig. 13b

Fig. 14

Fig. 15

Fig. 16

Fig. 17

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007016774 A1

- DE 102010003157 A1

**In der Beschreibung aufgeführte Nicht-Patentliteratur**

- **VON HIDEAKI TAMIYA.** Non-contact displacement meter for pm resolution. *Precision Engineering Society of Japan; Spring Meeting,* Marz 2012